# EUROPÄISCHE PATENTSCHRIFT

(11) **EP 1 230 166 B1**
(45) Veröffentlichungstag und Bekanntmachung des Hinweises auf die Patenterteilung: **04.08.2004**
(21) Anmeldenummer: 00987068.4
(22) Anmeldetag: 02.11.2000
(51) Int. Cl.: C02F 1/00

(54) **FILTEREINRICHTUNG FÜR FLÜSSIGKEITEN**
FILTRATION DEVICE FOR LIQUIDS
DISPOSITIF DE FILTRATION POUR LIQUIDES

(30) Priorität: 02.11.1999 DE 19952757
(43) Veröffentlichungstag der Anmeldung: 14.08.2002
(73) Patentinhaber: Brita GmbH, 65232 Taunusstein (DE)
(72) Erfinder: HOFMANN, Uwe, 65321 Heidenrod (DE); WEYRAUCH, Detlev, 56271 Kleinmaischeid (DE); REDER, Ernst, 55278 Hahnheim (DE)
(74) Vertreter: Fuchs Mehler Weiss & Fritzsche
(86) Internationale Anmeldenummer: PCT/DE2000/003857
(87) Internationale Veröffentlichungsnummer: WO 2001/032560

(56) Entgegenhaltungen:
- WO-A-96/21621
- WO-A-96/31440
- WO-A-98/17582
- WO-A-99/10076
- US-A- 5 049 272

## Beschreibung

Die Erfindung betrifft eine Filtereinrichtung für Flüssigkeiten mit einem zumindest teilweise mit Filtermaterial gefüllten Filterbecher, dessen Boden wenigstens eine siebartige Auslaßöffnung für die Flüssigkeit hat, und mit einem Deckel, der ein Innenvolumen (Vᵢ) vorgibt und der mit wenigstens einer Einlauföffnung für die Flüssigkeit und mit mindestens einer Entlüftungsöffnung für entweichende Luft versehen und flüssigkeitsdicht mit dem Filterbecher verbunden ist, wobei zwischen dem Filterbecher und dem Deckel ein siebartiges Flächengebilde angebracht ist.

Die vorstehend bezeichnete Filtereinrichtung ist bekannt. Sie dient dem Filtern von Wasser, wobei als Filtermaterial lonenaustauscher und/oder Aktivkohle verwendet wird. Die bekannte Filtereinrichtung hat die Form einer Kartusche, deren Längsmittelachse vorzugsweise vertikal so angeordnet wird, daß der Deckel oben ist und sich der Boden des Filterbechers unten befindet und die Flüssigkeit, vorzugsweise das zu filternde Wasser, oben in den Deckel einfließt und den Filterbecher unten am Boden verläßt. Die Flüssigkeit, vorzugsweise das zu filternde Wasser, fließt oben in die Einlaßöffnung ein und verläßt die Filterkammer durch die Auslaßöffnungen unten am Boden. Die bekannte Filtereinrichtung wird in einen dafür vorgesehenen Trichter einer Wasserreinigungsvorrichtung eingesetzt, der auf einen Auffang- bzw. Sammelbehälter für gefilterte Flüssigkeit eingesetzt und vorzugsweise oben mit einem abnehmbaren Deckel verschlossen wird. Der Benutzer füllt zum Beispiel Leitungswasser oben in den Trichter ein, welches nach Durchlaufen der Filtereinrichtung im Sammelbehälter für Nahrungsmittel-, vorzugsweise die Teeaufbereitung, oder dergleichen verwendet werden kann.

Für eine möglichst wirksame Filterung oder auch Wasseraufbereitung ist es erwünscht, der durch die Filtereinrichtung eintretenden Flüssigkeit, welche vorzugsweise Wasser ist, eine möglichst große Oberfläche an Filtermaterial anzubieten bzw. die Flüssigkeit zu zwingen, sich einer möglichst intensiven und umfangreichen Adsorptionstätigkeit zu unterziehen. Bekanntlich erhält man bei Granulaten als Fittermaterial eine um so größere Wirkoberfläche, je kleiner die Größe des einzelnen Filterteilchens ist. Es kann vorkommen, daß in dem Filtermaterial Teilchen von etwa 200 µm und kleiner vorhanden sind. Die der zu filternden, durchlaufenden Flüssigkeit angebotene Wirkoberfläche ist damit erfreulich groß. Dieser Vorteil ist aber mit dem Nachteil verbunden, daß einige dieser kleinsten Granulatpartikel durch die Einlaßöffnungen im Deckel und, wenn bodenseitig keine besonderen Maßnahmen getroffen sind, durch die Auslaßöffnungen im Boden hindurchtreten und aus der Filtereinrichtung damit austreten. Die dann teilweise auf der Flüssigkeitsoberfläche schwimmenden Partikel, zum Beispiel schwarze Aktivkohleteilchen, stören den Benutzer und sind unerwünscht.

Es gibt bereits ebene, aus Kunststoff eingespritzte Siebgewebe geringer Porengröße von zum Beispiel 200 µm, die man versuchsweise zum Zurückhalten des Filtermaterials an der Ober- und Unterseite des Filterbechers bzw. der Filterkammer anzuordnen versucht hat. Dabei hat es in bislang nicht erklärbarem Ausmaß Schwierigkeiten beim Durchfluß der Flüssigkeit bei dieser Art Siebe gegeben.

Die eingangs beschriebene Filtereinrichtung für Flüssigkeiten hat gegenüber älteren Einrichtungen bereits zwischen dem Filterbecher und dem Deckel ein siebartiges, textiles Flächengebilde vorgesehen, so daß auch kleine Granulatpartikel von zum Beispiel etwa 200 µm Breite nicht durch die Einlaßöffnungen im Deckel austreten können. Bodenseitige Maßnahmen werden hier nicht betrachtet, weshalb die Verbesserungen und neuen Maßnahmen sich nur auf die Öffnungen im Deckel richten und beziehen. Als siebartiges, textiles Flächengebilde wurde bei der bekannten Filtereinrichtung der eingangs beschriebenen Art bei einem bevorzugten Ausführungsbeispiel ein Gewebeeinsatz verwendet, und dieser sollte in den Filterbecher vorstehen. Bei einer Ausführungsform ist das bekannte Gewebeteil gewölbt und ragt daher in Lotrichtung ein Stück weit nach unten in den Filterbecher hinein. Die entscheidende Verbesserung des Rückhaltevermögens durch den Einsatz des textilen Flächengebildes bei der bekannten Filtereinrichtung und einen guten Durchfluß hat man immer dann gewährleistet, wenn das textile Flächengebilde mit dem Filtermaterial in Berührung steht. Mit Nachteil hat es Probleme gegeben, wenn diese Berührung zwischen dem textilen Flächengebilde einerseits und dem Filtermaterial in dem Filterbecher andererseits nicht mehr gegeben war.

Durch den oberen Rand eines Filterbechers kann man sich eine Ebene gelegt denken, längs welcher der Deckel mit dem Filterbecher flüssigkeitsdicht verschlossen wird. Man hatte erkannt, daß man die Fließprobleme nicht lösen konnte, wenn man ein ebenes textiles Flächengebilde zwischen Filterbecher und Deckel etwa im Bereich dieser gedachten Ebene anordnet. Man hat sich das so erklärt, daß über dem in der zu filternden Flüssigkeit eingetauchten Deckel eine nicht allzu hohe Flüssigkeitssäule steht, so daß der Druck der Flüssigkeit durch die Schwerkraft nicht allzu groß ist. Außerdem ist die Oberflächenspannung einer Flüssigkeit bekannt, die sich besonders bei kleinen Siebporen negativ dahingehend auswirkt, daß der geringste Luftgegendruck unterhalb des Deckels ausreicht, um den Durchfluß der Flüssigkeit sogar zu blockieren. In der Gewebetechnik nennt man das Verschließen der Poren mit einem Feuchtefilm "Segelbildung". Die Verwendung eines ebenen textilen Flächengebildes konnte hier nicht Abhilfe schaffen, weshalb bei der bekannten Filtereinrichtung der eingangs genannten Art das textile Flächengebilde aus der erwähnten Ebene in den Filterbecher hinein nach unten vorsteht bzw. in Richtung auf das Filtermaterial herausragt.

Viele Probleme wurden damit schon gelöst. Beim Füllen des Filterbechers mit Filtermaterial bis "fast zum Rand", d.h. zu 85% oder bis zu 95%, wird dieses vorstehende Flächengebildeteil mit dem Filtermaterial Berührung haben und dadurch an dieser Stelle die Oberflächenspannung aufbrechen mit der Folge, daß die Flüssigkeit hier zu fließen beginnt, ein etwaiges Luftpolster unter dem Deckel herausdrückt und damit einen etwaigen Gegendruck gegen den Druck der Flüssigkeitssäule erheblich vermindert und schließlich abbaut. Die zu filternde Flüssigkeit kann ohne Probleme durch das Filtermaterial strömen, und die kleinen Partikel des Filtermaterials werden in hervorragender Weise zurückgehalten.

In Fällen, bei denen das Filtermaterial eintrocknet, sinkt dessen Pegel im Filterbecher von oben nach unten ab mit der Folge, daß die Berührung mit dem nach unten gewölbten Flächengebildeteil fehlt und damit die bekannte Filtereinrichtung nicht funktioniert. Bei der Massenproduktion bekannter Filtereinrichtungen kommt es auch vor, daß die Dosierung des Filtermaterials im Filterbecher mit Toleranzen erfolgt. Bei einer Anzahl Fälle fehlt dann ebenfalls die Berührung zwischen Flächengebilde und Filtermaterial. Füllt man zu viel Material in den Filterbecher ein, dann kann bei hartem Wasser eine so starke Expansion erfolgen, daß die aus Filterbecher und Deckel bestehende Filterkartusche platzt. Füllt man zuwenig Filtermaterial ein, dann setzt man die gewünschte Berührung mit dem textilen Flächengebilde aufs Spiel. Außerdem wünscht man einen einwandfreien Betrieb der Filtereinrichtung unabhängig von der Füllhöhe des Filtermaterials.

In der WO 96/21621 wird eine Filterkartusche beschrieben, die zwischen Deckel und Filterbecher ein siebartiges Flächengebilde aufweist, das derart eingebaut ist, dass es am planen Deckelabschnitt vollflächig anliegt und mittig eine große Öffnung aufweist, die dem Durchmesser eines rohrförmigen Deckelteils entspricht. In dem rohrförmigen Deckelteil ist ein zweites siebartiges Gebilde plan angeordnet.

Die US 5,049,272 beschreibt eine Filterkartusche mit einem Vliesteil, das eine kegelstumpfförmige Gestalt und eine zentrale Öffnung aufweist. Das Vliesteil ist im Inneren des Deckels der Kartusche befestigt.

Die in der WO 98/17582 A und der WO 98/05401 A beschriebenen Kartuschen besitzen einen Deckel mit mehreren Fenstern, die einzeln mit einem siebartigen Flächengebilde bestückt sind.

Deshalb liegt der Erfindung die Aufgabe zugrunde, die Filtereinrichtung der eingangs genannten Art so weiter zu bilden, daß
a) bei Aufrechterhaltung der Rückhaltewirkung des textilen Flächengebildes für Teilchen mit einer Größe von etwa 200 µm,
b) auch bei unterschiedlichen Füllhöhen des Filterbechers mit Filtermaterial eine Verlangsamung des Durchflusses der Flüssigkeit durch das Filtermaterial ausgeschaltet wird, so daß eine einwandfreie Durchflutung und Belüftung gewährleistet ist und
c) insbesondere bei niedrigen Füllhöhen ein sicherer Betrieb gewährleistet ist.

"Sicherer Betrieb" heißt eine einwandfreie Durchflutung und Belüftung.

Diese Aufgabe wird erfindungsgemäß dadurch gelöst, daß das siebartige Flächengebilde einteilig und geschlossen ist und dass mindestens zeitweise während des Filtrationsbetriebes wenigstens ein Gebildeteil des siebartigen Flächengebildes in das Innenvolumen (Vᵢ) des Deckels vorsteht und dabei im Abstand von der Oberwand des Deckels angeordnet ist.

Der Innenraum der Filtereinrichtung, der durch den Filterbecher und den dazugehörigen Deckel begrenzt wird, bildet die Filterkammer. Das siebartige Flächengebilde ist vorzugsweise ein textiles Flächengebilde.

Die Erfindung bietet also eine Lehre an, welche den bisherigen Maßnahmen der eingangs bekannten Filtereinrichtung entgegenläuft. Das textile Flächengebilde soll nämlich mit wenigstens einem gewissen Anteil nach oben in den Deckel bzw. in dessen Innenvolumen hinein vorstehen. Aus der erwähnten Ebene zwischen Filterbecher und Deckel soll dieses Gebildeteil des siebartigen, textilen Flächengebildes also nach oben in den Deckel vorstehen.

Das Ausmaß dieses Vorstehens soll nach der Lehre derart gewählt werden, daß man oben im Bereich des höchsten Punktes des Flächengebildes einen Übergang von Luft zu Luft hat. Die Filtereinrichtung gemäß der Erfindung ist schwerkraftbetrieben. Es wird ähnlich wie bei den bekannten Filtereinrichtungen zu reinigende Flüssigkeit, zum Beispiel Wasser, oben in einen Trichter oberhalb der als Kartusche ausgebildeten Filtereinrichtung eingefüllt, das Wasser läuft durch das Filtermaterial in dem Filterbecher der Filterkartusche nach unten durch die darüber stehende Wassersäule (Gewicht, Schwerkraft) hindurch und tritt unten in eine Auffangkanne aus. Die Längsrichtung der Auffangkanne, der Kartusche, des Filterbechers, des Deckels und auch des Trichters liegt bei der schwerkraftbetriebenen Filtereinrichtung im allgemeinen etwa in der Vertikalen. Die Filtereinrichtung gewährleistet einen einwandfreien Betrieb aber auch, wenn man diese Achse und die ganze Einrichtung schräg hält, wobei dann die erwähnte Achse unter einem Winkel zur Vertikalen bzw. zum Lot angeordnet ist. In jedem Falle befindet sich der am weitesten von dem Filterbecher entfernte Teil des textilen Flächengebildes "oben", wobei man zur Veranschaulichung des Aufbaues, der Gestaltung und des Betriebes der Filtereinrichtung auch von dem höchsten Punkt oder dem oberen Punkt oder Bereich des textilen Flächengebildes im Deckel spricht. Im Gegensatz zu der schwerkraftbetriebenen Einrichtung gibt es auch die druckkraftbetriebene, die hier nicht näher betrachtet wird.

Wenn sich also an dem oben im Deckel befindlichen Teil des textilen Flächengebildes auf beiden Seiten desselben, d.h. innerhalb des Flächengebildes und außerhalb des Flächengebildes (in beiden Fällen aber innerhalb des Deckels), Luft befindet, zum Beispiel in Form eines Luftkissens, dann wird überraschend durch das sich einstellende Druckgleichgewicht von Flüssigkeit und Luft ein Entweichen der Luft unter Beseitigung des Luftkissens vermieden. Vielmehr liegt am weitesten oben, d.h. an dem am weitesten von dem Filterbecher unten entfernten Teil für austretende Luft, ein Übergang von Luft innerhalb des Flächengebildes zu Luft außerhalb des Flächengebildes vor. Diese Maßnahme gilt unbeachtlich der Höhe der außerhalb des Deckels befindlichen Flüssigkeit. Wenn also zu Anfang ein Entlüften erforderlich ist, tritt die Luft einwandfrei durch diesen Luft/Luft-Übergang nach oben aus, bis sich das erwähnte Gleichgewicht eingestellt hat, der Luftraum oben unter der Oberwand des Deckels verhältnismäßig klein geworden ist und für den Durchlauf von zu reinigender Flüssigkeit von oben nach unten nicht mehr zusätzlich eine Belüftung erforderlich ist. Die Filtereinrichtung funktioniert auch dann einwandfrei, wenn ausnahmsweise ein Überströmen des oberen Teils des Flächengebildes erfolgte. Es hat sich gezeigt, daß diese Verhältnisse auch für unterschiedliche Füllhöhen des Filterbechers mit Filtermaterial gelten. Dies trifft für unterschiedlich ausgestaltete Filtereinrichtungen zu, trifft aber insbesondere für die gleiche Außengeometrie der üblichen Haushalts-Filtereinrichtung bei unterschiedlichen Höhen von Filtermaterial zu. Eine einwandfreie Funktion der neuen Filtereinrichtung ist also in einer viel größeren Anzahl von Fällen gewährleistet als bei den bekannten Fällen, gleichgültig wie hoch der Füllstand im Filterbecher ist, ob das Filtermittel ausgetrocknet ist oder ob gar der Filterbecher durch Quellen über die vorstehend genannte Ebene zwischen Filterbecher und Deckel hinaus "überfüllt" ist. Der Filter- und Siebbetrieb funktionieren einwandfrei, wenn das textile Flächengebilde in der erfindungsgemäßen Ausgestaltung und Anordnung Anwendung findet, selbst wenn das textile Flächengebilde mit dem Filtermaterial nicht in Berührung steht. Wenn das entfernte Teil des textilen Flächengebildes, welches sich nach oben in den Becher hinein erstreckt, groß genug ist und wenn auch der Deckel groß genug ist, wird jede durch Quellung hervorgerufene Volumenerhöhung des Filtermaterials aufgenommen, ohne daß schädliche Drücke entstehen.

Schon die Deckel bekannter Filtereinrichtungen und erst recht die gemäß der ersten Ausführungsform der Erfindung sind so groß ausgestaltet, daß ihr Innenvolumen etwa 30% des Volumens des Filterbechers beträgt. Gewöhnlich werden aber nur Zusatzvolumina von etwa 10% für die Aufnahme quellenden Filtermaterials benötigt. Es genügt daher, wenn das von dem in den Deckel vorstehenden Gebildeteil bereitgestellte Innenvolumen größer oder gleich etwa 5% des Volumens des Filtermaterials im Filterbecher ist.

Vorteilhaft ist es gemäß der ersten Ausführungsform der Erfindung, wenn der oben im Deckel befindliche, entfernte Teil des Flächengebildes und die Entlüftungsöffnung oberhalb des höchstgelegenen Endes der Einlauföffnung angeordnet sind. Zum Verständnis dieser Maßnahme denkt man sich wieder eine horizontale Ebene zwischen Filterbecher oben und Deckel unten, wobei eine neue horizontale Ebene durch das höchstgelegene Ende der höchsten Einlauföffnung und parallel zu der horizontalen Ebene zwischen Filterbecher und Deckel verläuft. Achtet man dann darauf, daß der obere Teil des Flächengebildes oberhalb dieser neuen Ebene liegt, dann zeigt sich ein besonders sicherer Betrieb, d.h. die zu reinigende Flüssigkeit strömt einwandfrei durch die Einlauföffnungen nach unten, während Luft, welche dadurch verdrängt wird, einwandfrei nach oben abströmen kann. Dabei sollte auch sichergestellt sein, daß die Entlüftungsöffnungen über dieser gedachten horizontalen Ebene liegen. Diese Maßnahmen begünstigen wiederum den Luft/Luft-Übergang am oberen Teil des Flächengebildes zur Gewährleistung eines einwandfreien Betriebes sowohl beim Befüllen, beim Hauptbetrieb als auch gegen Ende des Filterbetriebes, wenn das Rohwasser langsam aus dem Trichter herausläuft. Diese Maßnahmen gelten für eine und für mehrere Einlauföffnungen im Deckel, gelten aber auch für unterschiedliche Gestaltungen von Einlauföffnungen, zum Beispiel solche, die sich schlitzartig vertikal vom unteren Rand des Deckels nach oben erstrecken.

Eine günstige Deckelform weist einen unteren, etwa zylindermantelförmigen (mit kleiner kegelstumpfförmigen Anschrägung) Bereich auf, in welchem am Umfang im Abstand voneinander einige Einlauföffnungen angeordnet sind, zum Beispiel vier Öffnungen. An diesen unteren größeren Volumenbereich des Deckels, dessen Außenumfang etwa gleich dem des Außenumfanges des Filterbechers ist, schließt sich nach oben eine kegelstumpfförmige Übergangsfläche ringförmig an, die an den weiten Umfangsrand eines umgekehrten Becherteiles des Deckels angeschlossen wird. In diesem Becherteil des Deckels bildet dessen Boden die "Oberwand des Deckels, in welcher wenigstens eine Entlüftungsöffnung enthalten ist, vorzugsweise im Abstand zwei Entlüftungsöffnungen für die entweichende Luft.

Zweckmäßig ist es gemäß der ersten Ausführungsform der Erfindung, wenn das in das Innenvolumen des Deckels vorstehende Gebildeteil des Flächengebildes wenigstens teilweise gewölbt ist. Das Flächengebilde kann die Gestalt einer Glocke, eines Domes, einer Halbkugel, einer Teilkugel usw. haben. Die Gestalt des vorzugsweise textilen Flächengebildes kann aber auch Ecken, Spitzen und Kanten haben, so daß das in den Deckel vorstehende Gebildeteil würfel-, pyramiden-, quaderförmig oder dergleichen sein kann. Die Ausgestaltung des textilen Flächengebildes gelingt durch diese Maßnahmen preiswert und technisch einwandfrei ohne kostspielige Halterungen, wie zum Beispiel eingespritzte Ringe oder Rippen. Durch das Vermeiden zusätzlicher Spritzwerkzeuge wird die Herstellung ersichtlich einfacher und preiswerter.

Bei vorteilhafter weiterer Ausgestaltung der ersten Ausführungsform der Erfindung hat das vorstehende Gebildeteil des Flächengebildes die Gestalt einer Kugelkappe und ist im unteren, äußeren Bereich am oberen Rand des Filterbechers sowie am unteren Rand des Deckels befestigt. Vorzugsweise ist es angeschweißt. Die Kugelkappe ist nicht streng mathematisch/geometrisch zu sehen, sondern das textile Flächengebilde hat vorzugsweise im oberen Bereich Kalottenform, also die Gestalt einer Kugelkappe, und kann im unteren Bereich auslaufend geformt sein. Es können kegelstumpfförmige Bereiche angeschlossen sein. Das textile Gebildeteil kann auch mit einer Ebene, einer Kante oder Spitze in den Deckel hinein vorstehen. Durch die Befestigung des Flächengebildes am unteren Rand des Deckels ist sichergestellt, daß der mit dem Filtermaterial gefüllte Raum, der sich überwiegend im Bereich des Filterbechers befindet, der sich aber durch die oben beschriebenen Gegebenheiten mehr oder weniger auch in den Deckel hinein erstrecken kann, vollständig durch Seitenwandungen und Siebe eingeschlossen, eingekapselt ist. Die Poren des siebartigen, textilen Flächengebildes sind klein genug, um das Austreten auch kleinerer Teilchen außerhalb dieses "Siebraumes" zu verhindern. Gleichwohl können Fließmittel durch das textile Flächengebilde ein- und/oder ausströmen.

Günstig ist es gemäß der ersten Ausführungsform der Erfindung weiterhin, wenn das Flächengebilde ein Gewebe, Gewirke, Vlies oder geformtes Kunststoffteil ist und wenn vorzugsweise die Porengröße des Flächengebildes im Bereich von 50 µm bis 300 µm und vorzugsweise von 80 µm bis 200 µm liegt. Das textile Flächengebilde kann aus verschiedenen Materialien hergestellt sein, vorzugsweise aus Kunststoff. Dabei können Kunststoffäden verwendet werden, oder es kann das gesamte Gebilde geformt sein. Zum Beispiel kann man durch Tiefziehen eines Polyesterkunststoffes ein solches textiles Flächengebilde erstellen. Erfindungsgemäß ist jegliche Struktur des textilen Flächengebildes denkbar. Nach der Herstellung des Flächengebildes hat dieses zunächst über seine gesamte Fläche die gleiche Struktur und auch etwa die gleiche Porengröße. Bei der Umgestaltung eines zum Beispiel ebenen textilen Flächengebildes soll nach der Lehre dieser Erfindung darauf geachtet werden, daß die Struktur sich nicht wesentlich ändert, das textile Flächengebilde also nicht mehr als 20 bis 30% gedehnt oder verzerrt wird. Zulässig sind hingegen leichte Winkelverschiebungen, wie sie zum Beispiel beim Übergang von einem Quadrat zu einem Parallelogramm entstehen. Auch Falten sind in diesem Rahmen zulässig, weil diese häufig beim Ausformen eines zunächst ebenen Flächengebildes zu kantigen, eckigen Formen nicht vermeidbar sind. Es soll nur darauf geachtet werden, daß neben den Kanten und Ecken die Struktur des Flächengebildes sich nicht wesentlich, d.h. mehr als 20 oder 30% verändert hat, zum Beispiel die Porengröße nicht in diesem Maße vergrößert hat. Es sollte also der Siebeffekt des textilen Flächengebildes auch nach dem Ausformen erhalten bleiben. Es sollte auch nicht das textile Flächengebilde ganzflächig eine derart kleine Porengröße erhalten, daß der Durchtritt der Flüssigkeit gefährdet ist.

Es ist ferner zweckmäßig, wenn bei der ersten Ausführungsform erfindungsgemäß das Verhältnis der fluidtechnischen Querschnittsflächen A:B:C:D mit einer Toleranz von etwa ±50% ungefähr gleich 1:2:10:20 ist, wobei gilt:
- A =: der freie gesamte Durchtrittsquerschnitt der Entlüftungsöffnungen im Deckel;
- B =: der freie gesamte Durchtrittsquerschnitt der Einlauföffnungen für die Flüssigkeit im Deckel;
- C =: der projizierte, gesamte, freie, für die Entlüftung dienende Durchtrittsquerschnitt der Poren des oben im Deckel befindlichen Teiles des Flächengebildes; und
- D =: der freie, gesamte Durchtrittsquerschnitt für Flüssigkeit durch die Poren des ringförmigen, unteren Mantelteiles des Flächengebildes.

Eine besonders geeignete Ausführungsform der Erfindung verwendet eine Filtereinrichtung, deren Filterbecher ein Volumen von 140 ml hat. Setzt man auf einen solchen Becher den beispielsweise oben beschriebenen Deckel mit dem erweiterten Unterteil und dem schmaleren Oberteil in Form des umgekehrten Bechers, wobei die Einlauföffnungen für Flüssigkeit im erweiterten unteren Teil und die Entlüftungsöffnungen für entweichende Luft im Oberboden des Deckels angeordnet sind, dann beträgt bei einer speziellen bevorzugten Ausführungsform
A ≈ 24 mm²
B ≈ 66 mm²
C ≈ 300 mm² und
D ≈ 680 mm².

Der freie Querschnitt A setzt sich durch Aufsummieren von zwei Entlüftungsöffnungen im Deckel zusammen. Der freie Querschnitt B setzt sich aus vier Einlauföffnungen für die Flüssigkeit im unteren weiteren Bereich des Deckels zusammen. Bei dem projizierten freien Durchlaufquerschnitt C für Luft im oberen Teil des Flächengebildes hat man einen arithmetischen Mittelwert der offenen Filterfläche des Flächengebildes von ca. 42,5% genommen. Hier gibt es eine Spannweite zwischen etwa 30% bis etwa 65%.

Für die Fläche D, d.h. die freie Durchtrittsfläche für die Flüssigkeit in dem unteren Bereich des textilen Flächengebildes mit dem größeren Durchmesser hat man einen arithmetischen Mittelwert der offenen Filterfläche des Flächengebildes von ca. 42,5% angenommen. Hier gilt auch eine Spannweite von zwischen etwa 30% bis etwa 65%.

Bei Einhaltung dieses erfindungsgemäß gelehrten Verhältnisses bzw. der Einzefverhältnisse, zum Beispiel A:B = 1:2 usw., ist eine einwandfreie Belüftung einerseits und Durchflutung von Flüssigkeit andererseits gewährleistet. Die angegebenen Größenverhältnisse der Poren des textilen Flächengebildes erlauben die Vermeidung von Durchfließproblemen, wobei dann sehr effektive Filtermaterialien mit großen Wirkflächen (kleinen Partikeln) verwendet werden können, ohne daß ein Herausrieseln oder Durchschwemmen von kleinen Partikeln durch die Öffnungen zu befürchten wäre.

Es kann herstellungstechnisch vorteilhaft sein, den Deckel mit dem textilen Flächengebilde nach dessen Formung unlösbar zu verbinden. So kann zum Beispiel ein Spritzgußhersteller den Deckel spritzgießen, das textile Flächengebilde formen und diese beiden Teile flüssigkeitsdicht miteinander verbinden, zum Beispiel verschweißen.

Dieses Zwischenprodukt (Deckel mit textilem Flächengebilde) kann dann zum Füllbetrieb geliefert werden, wo es in Magazinen zur Verfügung steht und von einer automatischen Verschließanlage ergriffen wird, um dann auf den gefüllten Filterbecher aufgesetzt und mit diesem verbunden zu werden. Weder ein Automat noch das Personal des Herstellers muß sich dann mit einzelnen Gewebeeinsätzen abgeben und diese mit besonderer Sorgfalt transportieren und anordnen. Der Deckel muß zum Verschließen des Filtereinsatzes ohnehin richtig positioniert werden, und wenn das textile Flächengebilde unlösbar mit diesem verbunden ist, ist kein besonderer Montageschritt zusätzlich erforderlich.

Der oben im Deckel befindliche entfernte Teil des Flächengebildes ist im Abstand von der Oberwand des Deckels angeordnet. Die Ausbildung eines Luftraumes unter der Oberwand des Deckels läßt sich auf diese Art besonders gut erreichen. Ein Abstand zwischen dem besagten Teil des Flächengebildes einerseits und der inneren Oberfläche der Oberwand des Deckels andererseits beträgt bei einem bevorzugten Ausführungsbeispiel 2 mm. Dann hat man einerseits einen maximalen Quellraum für das Filtermaterial in dem textilen Flächengebilde, und es ist gleichzeitig der oben im Deckel befindliche, entfernte Teil des Flächengebildes trocken gehalten, so daß dort ein Übergang von Luft zu Luft existiert.

Erfindungsgemäß kann man auch das durch das Flächengebilde bereitgestellte Innenvolumen größer oder gleich 5% des Füllvolumens des Filtermaterials im Filterbecher machen. Es ist schon gesagt worden, daß bei 100%-iger Füllung des Filterbechers mit Filtermaterial im Falle der Befeuchtung eine Quellung des Volumens um etwa 10% erfolgen kann. Das Volumen von etwa 10% des Filtermaterials kann sich in den Raum des textilen Flächengebildes oberhalb derjenigen Ebene entwickeln und dort ausdehnen, die eingangs als horizontale gedachte Ebene am unteren Rand des Deckels bestimmt wurde. Gewöhnlich wird der Filterbecher nicht 100%-ig mit Filtermaterial gefüllt sein und sicher auch nicht allein mit dem quellfähigen Ionenaustauscher. Jedenfalls ist ein ausreichender Quellraum für Filtermaterial gegeben. Deshalb sind die erfindungsgemäß vorgesehenen Angaben für den garantiert sicheren Betrieb vorgesehen. Mit Vorteil wird hierdurch eine Beeinträchtigung des Wasserdurchflusses gegenüber bekannten Filtereinrichtungen ausgeschaltet.

Ferner ist es günstig, wenn erfindungsgemäß der oben im Deckel befindliche, entfernte Teil des Flächengebildes wenigstens im oberen Bereich hydrophobes oder hydrophobiertes Material aufweist. Ein zum Beispiel aus Polyester hergestelltes textiles Flächengebilde hat hydrophile Eigenschaften, hat also eine gewisse Affinität zu der Flüssigkeit, vorzugsweise Wasser. Ein solcher Anteil müßte hydrophobiert werden. Man erreicht durch die erfindungsgemäße Maßnahme, den oberen Teil des Flächengebildes mit einem hydrophoben oder hydrophobierten Anteil auszustatten, daß nach einer Benetzung und nach dem Abziehen der Flüssigkeit die Maschen bzw. Poren des textilen Flächengebildes offen bleiben. Der hydrophobe Anteil sorgt für die wasserabweisende Eigenschaft dieses Teils des textilen Flächengebildes. Der hydrophobe Anteil sollte in dem Bereich vorgesehen sein, wo der Übergang von Luft zu Luft innerhalb des Deckels angestrebt wird. Im allgemeinen ist dies der am weitesten von dem Filterbecher entfernte, oben im Deckel befindliche Teil des Flächengebildes. Bei der vorstehend erwähnten, speziellen und bevorzugten Ausführungsform mit dem freien Durchtrittsquerschnitt für die Entlüftung C = 300mm² könnte zum Beispiel diese Fläche C hydrophobiert werden. Eine derart große Fläche mit einem hydrophoben Anteil zu versehen, dient der Funktionssicherheit der Filtereinrichtung.

In Ausnahmefällen kann es vorkommen, daß Wasser den oberen Teil des textilen Flächengebildes berührt oder im Anfangsstadium der Filtration kurzzeitig überströmt und versuchen wird, die Poren mittels Segelbildung zu schließen. Durch die erfindungsgemäße Hydrophobierung ist erreicht, daß die aus der Filtereinrichtung abzuführende Luft nahezu ungehindert ins Wasser übergeht.

Nicht anliegendes Wasser, sondern die Segel in den Poren des textilen Flächengebildes hindern die Luft am Durchtritt ins Nachbarmedium (Wasser und/oder Luft).

Wenn man bei weiterer vorteilhafter Ausgestaltung der ersten Ausführungsform der Erfindung den unteren Teil des Flächengebildes im Bereich der Einlauföffnungen für den Durchtritt der Flüssigkeit mit hydrophilen Teilen versieht, begünstigt dies ersichtlich den Durchfluß der zu filternden Flüssigkeit. In diesem unteren Bereich neben den Einlauföffnungen für die Flüssigkeit kann man das textile Flächengebilde auch mit Stoffen behandeln, durch welche das Flächengebilde hydrophiler wird. Bei diesen Stoffen kann es sich um Flüssigkeiten handeln, durch welche die Oberfläche des Kunststoffs beeinflußt wird.

Ein bahnförmiges, flächiges, textiles Flächengebilde kann zum Umformen für die Bildung eines in den Deckel vorstehenden, eigenstabilen Gebildeteils und zum Befestigen am Deckel einer Filtereinrichtung für Flüssigkeiten verwendet werden. Es ist vorteilhaft, ein textiles Flächengebilde auszuwählen, welches eigenstabil bzw. formstabil ist. Ein solches Flächengebilde mit der gewünschten Porengröße ist plastisch verformbar. Eine domförmige oder glockenförmige Wölbung in einem solchen textilen Flächengebilde hält sich dann selbst. Die jeweils gewählte bestimmte Form, zum Beispiel auch ein Quader, bleibt in dieser Form im großen und ganzen stabil. Man kann diese Formstabilität durch die Dicke der für die Erstellung des Flächengebildes verwendeten Fäden, durch die Menge der Fäden, durch die Verknüpfungsart und durch das Material der Fäden beeinflussen. Als textiles Flächengebilde kann man auch ein Gewebe auswählen, welches durch Tiefziehen eines Kunststoffes herstellbar ist. Die Winkelstabilität und Dehnungsstabilität des Flächengebildes wurde bereits angesprochen. Wenn durch die Ausformung eines flächigen, textilen Flächengebildes, zum Beispiel zu einem Quader oder einer Glockenform, Falten entstehen, werden diese eigenstabil an der einmal eingebrachten Stelle wunschgemäß verbleiben.

Vor diesem Umformen kann das zum Beispiel durch Tiefziehen hergestellte flächige, textile Gebilde in Form eines Bogens oder einer Bahn hergestellt werden. Man kann das textile Flächengebilde von einer Rolle abziehen und dann in die gewünschte Gestalt umformen, zum Beispiel Glocke, Quader. Die Poren bzw. Maschen in diesem textilen Flächengebilde bleiben dann nach dem Formen ohne große Dehnung oder Verzerrung. Dadurch bleibt der Siebeffekt gewährleistet.

Nach dem Umformen des textilen Flächengebildes (in die Gestalt einer Glocke oder eines Quaders oder dergleichen) wird das Flächengebilde passend ausgeschnitten oder abgestanzt und am Umfang zum Beispiel durch Ultraschall mit dem äußeren unteren Rand des Deckels (an seinem freien offenen Ende) verschweißt.

Ein anderes Herstellungsverfahren erfolgt derart, daß das textile Flächengebilde nach dem Abziehen von der Rolle in Bahnform zunächst gehalten wird, dann während des Haltens umgeformt wird, in dieser Gestalt während des Haltens in den Deckel eingebracht, dann an dessen unterem Außenrand verschweißt und danach abgestanzt wird.

Durch die Erfindung wird die Wirkung der Filtereinrichtung in keiner Weise beeinträchtigt. Die Rückhaltewirkung des textilen Flächengebildes für die kleinen Teilchen des Filtermaterials wird aufrechterhalten, und gleichwohl ist eine Verlangsamung des Durchflusses der Flüssigkeit durch das Filtermaterial auch dann ausgeschaltet, wenn der Filterbecher nur teilweise, d.h. wenig gefüllt ist. Es kommt in unerwarteter Weise nicht mehr darauf an, daß das textile Flächengebilde mit dem Filtermaterial zum Funktionieren immer einen körperlichen Kontakt hat. Auch wenn bei der erfindungsgemäßen Filtereinrichtung eine Berührung des textilen Flächengebildes mit dem Filtermaterial fehlt, bleibt die Funktion der Filtereinrichtung doch voll erhalten. Wenn andererseits der gesamte Filterbecher mit Filtermaterial gefüllt ist, so daß durch eine Quellung von etwa 10 bis höchstens 20% bei herkömmlichen Einrichtungen der Durchfluß der Flüssigkeit verlangsamt würde oder gar ein Platzen des Gerätes auftreten könnte, sind diese nachteiligen Effekte ebenfalls durch die Erfindung ausgeschaltet.

Durch die Druckdifferenz (hydrostatischer Druck) zwischen den Einlauföffnungen für Flüssigkeit im unteren Bereich des Deckels einerseits und den Entlüftungsöffnungen für Luft in der Oberwand des Deckels andererseits wird dafür gesorgt, daß Luft immer oben entweicht und unten die Flüssigkeit einläuft und nicht umgekehrt. Der Luftdruck in dem oben im Deckel befindlichen Luftraum ist stets so groß, daß die Luft nach oben herausgedrückt wird und nicht Flüssigkeit oben in die Entlüftungsöffnungen eingedrückt wird oder einläuft.

Gegenüber herkömmlichen Filtereinrichtungen sind die Entlüftungsöffnungen in der Oberwand des Deckels erfindungsgemäß recht groß gewählt. Bei einer bevorzugten Ausführungsform sind zum Beispiel zwei schlitzartige Entlüftungsöffnungen mit einer Breite von jeweils 1,5 mm und einer Länge von jeweils 8 mm vorgesehen.

Dadurch ist sichergestellt, daß mit dem unter der Oberwandung des Deckels vorhandenen Druck die Luft auch immer aus diesen Öffnungen austritt, wenn Flüssigkeit unten zugeführt wird.

Durch das textile Flächengebilde kann die Luft von unten nach oben innerhalb des Deckels herausgelangen, wenn beidseitig des flächigen, textilen Flächengebildes Luft vorhanden ist oder die Segelbildung vermieden ist.

Die Segelbildung an dem oberen Teil des textilen Flächengebildes wird durch die hydrophoben Anteile vermieden. Selbst wenn dann also durch Kippen oder aus anderen Gründen Flüssigkeit auf die Maschen oder Poren dieses oberen Teils des textilen Flächengebildes kommt, bleiben diese Poren nach dem Geradestellen der Filtereinrichtung offen.

Bei einer Filtereinrichtung, bei der das siebartige Flächengebilde derart angebracht ist, dass es zusammen mit den Wänden des Filterbechers ein Volumen (Vᵤ) bildet, in dem sich das Filtermaterial befindet, ist das siebartige Flächengebilde zumindest teilweise bewegbar, so daß es zwei Extrempositionen und dazwischen liegende Zwischenpositionen einnehmen kann, wobei beim Übergang von der ersten zur zweiten Extremposition das Volumen (Vᵤ) um ein Differenzvolumen ΔV erniedrigt wird. Dadurch, daß das siebartige Gebilde beweglich angeordnet ist, kann das Volumen (Vᵤ), in dem sich das Filtermaterial befindet, an die gewünschten Bedürfnisse angepaßt werden. Ein Platzen der Filterkartusche wird durch diese Maßnahme wirksam verhindert, da eine sehr starke Expansion des Filtermaterials lediglich dafür sorgt, daß das flexible Flächengebilde eine Position in der Nähe der ersten Extremposition einnimmt, so daß das Volumen (Vᵤ), in dem sich das Filtermaterial befindet, vergrößert wird.

Das siebartige Flächengebilde kann prinzipiell jeder Gegenstand sein, der die gewünschte Siebfunktion erfüllt und der hinreichend beweglich ist.

Auch wenn das Flächengebilde im Prinzip jede beliebige Form aufweisen kann, beispielsweise kann es völlig eben angeordnet sein, so sieht dennoch eine bevorzugte Ausführungsform vor, daß die Fläche einer durch den Rand des Flächengebildes gelegten Referenzebene kleiner ist als die tatsächliche Fläche des Flächengebildes. Dadurch ist gewährleistet, daß sich das Flächengebilde in mindestens einer Richtung über die Referenzebene hinaus wölbt. Das über die Referenzebene vorstehende Teil des Flächengebildes hat vorzugsweise die Gestalt einer Kugelkappe. Die Kugelkappe ist nicht streng mathematisch/geometrisch zu sehen, sondern das textile Flächengebilde hat vorzugsweise Kalottenform bzw. eine abgerundete Topfform und kann im radial äußeren Bereich auslaufend geformt sein. Es können kegelstumpfförmige Bereiche angeschlossen sein. Das Gebildeteil kann auch mit einer Ebene, einer Kante oder Spitze aus der Referenzebene hervorstehen. Die Poren des siebartigen Gebildes sind klein genug, um das Austreten auch kleinerer Teilchen aus dem einen Volumen (Vᵤ), dem sogenannten "Siebraum" zu verhindern. Gleichwohl können Fließmittel durch das Flächengebilde ein- und/oder ausströmen.

Die vergrößerte Fläche des Flächengebildes hat überdies den Vorteil, daß die Durchtrittsfläche für die zu filternden Flüssigkeiten größer wird, so daß ein zügiges Filtern möglich wird.

Eine bevorzugte Ausführungsform der Filtereinrichtung sieht vor, daß sie mindestens eine Entlüftungsöffnung für entweichende Luft aufweist, die auf derselben Seite des siebartigen Flächengebildes angeordnet ist, wie die Einlaßöffnung. Da sich zumindest zu Beginn des Filtervorganges meist Luft in der Filterkammer befindet, sorgen die erwähnten Entlüftungsöffnungen dafür, daß diese Luft durch die Entlüftungsöffnungen zügig entweichen kann, so daß insbesondere zu Beginn des Filtervorganges der Durchfluß nicht verzögert wird.

Auch wenn der erfindungsgemäße Vorteil zumindest zum Teil auch durch ein sehr kleines Differenzvolumen ΔV erzielt wird, so sieht eine besonders bevorzugte Ausführungsform dennoch vor, daß das Differenzvolumen mindestens 1 %, vorzugsweise mindestens 5%, besonders bevorzugt mindestens 10% des Füllvolumens des Filtermaterials im Filterbecher beträgt.

Wahlweise kann das Differenzvolumen auch derart gewählt werden, daß es mindestens 1 %, vorzugsweise mindestens 5%, besonders bevorzugt mindestens 10% des Volumens Vᵤ beträgt. Durch die beschriebene Mindestbeweglichkeit des siebartigen Flächengebildes wird erreicht, daß die erfindungsgemäße Filtereinrichtung auch bei sehr stark schwankender Füllhöhe des Filtermaterials ordnungsgemäß funktioniert.

Es kann beispielsweise durch eine spezielle Formgebung des siebartigen Gebildes erreicht werden, daß die eingangs erwähnte Segelbildung nur eingeschränkt auftritt. Die Segelbildung wird in einer bevorzugten Ausführungsform dadurch vermieden, daß das siebartige Flächengebilde in der zweiten Extremposition mit der entsprechend eingestellten Oberfläche des Filtermaterials und/oder einem weiteren Bauteil in Berührung kommt. Dadurch, daß das siebartige Flächengebilde mit der Oberfläche des Materials in Berührung tritt, werden im Bereich der Berührungsfläche die Segel aufgebrochen, und die Flüssigkeit kann nahezu ungehindert das Siebgebilde durchqueren. Es versteht sich, daß die erwähnte Berührung von siebartigem Flächengebilde einerseits und Oberfläche des Filtermaterials andererseits auch durch eine Berührung des siebartigen Flächengebildes mit einem weiteren Bauteil ersetzt werden kann. Dieses weitere Bauteil kann beispielsweise ein im wesentlichen zentral in des Filterbechers angebrachter Stab sein, der in der zweiten Extremposition das siebartige Flächengebilde berührt, so daß die Segel an den Berührungspunkten aufgebrochen werden. Dieses weitere Bauteil hat zudem den Vorteil, daß auch bei extrem niedriger Füllhöhe des Filtermaterials oder sogar bei Fehlen des Filtermaterials in der zweiten Extremposition des siebartigen Gebildes ein Aufbrechen der Flüssigkeitssegel durch Berührung gewährleistet ist. Da in der Regel durch die Berührung des siebartigen Gebildes mit dem Filtermaterial eine größere Berührungsfläche erreicht wird als durch die Berührung des siebartigen Flächengebildes mit dem weiteren Bauteil, wird das Bauteil vorzugsweise derart angeordnet, daß es nur im Falle einer sehr geringen Befüllung des Filterbechers mit Filtermaterial mit dem siebartigen Flächengebilde in Berührung kommen kann und in allen anderen Fällen unterhalb des Füllstands des Filtermaterials angeordnet ist.

Eine weitere besonders bevorzugte Lösung der zweiten Ausführungsform der vorliegenden Erfindung sieht vor, daß das siebartige Flächengebilde in der ersten Extremposition in der entgegengesetzten Richtung aus der Referenzebene ragt wie in der zweiten Extremposition. Vorzugsweise berührt der von der Referenzebene entfernte Teil des Flächengebildes in der ersten Extremposition die Wand der Filterkammer bzw. des Deckels nicht. Da sich in der Regel während des gesamten Filtervorganges in einem im wesentlichen von dem Filtermaterial entfernten Teil der Filterkammer eine Luftblase bzw. ein Luftpolster befindet, wird durch das vorstehend beschriebene Merkmal erreicht, daß in der ersten Extremposition sich auf beiden Seiten des am weitestens von der Referenzebene entfernten Teils des Flächengebildes Luft befindet. Dadurch, daß sich zumindest in einem kleinen Bereich des siebartigen Flächengebildes ein Übergang von Luft zu Luft bildet, wird in diesem Bereich eine Segelbildung wirksam verhindert.

Die erfindungsgemäße Filtereinrichtung ist vorzugsweise schwerkraftbetrieben, so daß in der ersten Extremposition des Gebildes zumindest ein Teil des Flächengebildes höher liegt als derselbe Teil in der zweiten Extremposition. Es versteht sich aber, daß die erfindungsgemäße Filtereinrichtung auch druckgetrieben einsetzbar ist. "Höher" bzw. "tiefer" wird hier in Bezug auf die Flußrichtung verstanden, so daß sich das Flächengebilde nach unten bewegt, wenn es sich im wesentlichen in Richtung der Flußrichtung der zu filternden Flüssigkeit bewegt.

Besonders bevorzugt ist eine Ausführungsform, bei der in der ersten Extremposition der von der Referenzebene entfernte Teil des Flächengebildes und die Entlüftungsöffnung oberhalb des höchstgelegenen Endes der Einlauföffnung angeordnet sind. Dadurch wird gewährleistet, daß praktisch während des gesamten Filtervorganges sich in der Nähe der Entlüftungsöffnung ein Luftpolster bildet, in das das Flächengebilde in seiner ersten Extremposition eingreift, so daß bei zumindest einem Teil des Flächengebildes ein Übergang von Luft zu Luft entsteht.

Das textile Flächengebilde besteht vorzugsweise aus einem Gewebe, Gewirke, Gelege, Vlies oder geformtem Kunststoffteil und weist vorzugsweise eine Porengröße im Bereich von 50 µm bis 300 µm und vorzugsweise zwischen 80 µm und 200 µm auf.

Wie bereits angedeutet, ist das siebartige Flächengebilde in seiner ersten Extremposition nach oben gewölbt, so daß es nahezu während des gesamten Filtervorganges zumindest zum Teil in ein im Bereich der Entlüftungsöffnungen bestehendes Luftpolster eingreift, so daß im Bereich des höchsten Punktes des Flächengebildes ein Übergang von Luft zu Luft besteht. Die erfindungsgemäße Filtereinrichtung wird vorzugsweise derart gestaltet. daß das Verhältnis der fluidtechnischen Querschnittsflächen A:B:C:D mit einer Toleranz von etwa ±50%, vorzugsweise etwa ±25%, ungefähr gleich 1:2:10:20 ist, wobei
- A =: der freie gesamte Durchtrittsquerschnitt der Entlüftungsöffnungen ist;
- B =: der freie gesamte Durchtrittsquerschnitt der Einlauföffnungen für die Flüssigkeit ist,
- C =: der freie, gesamte, für die Entlüftung dienende Durchtrittsquerschnitt der Poren des Flächengebildes in der ersten Extremposition und
- D =: der freie, gesamte Durchtrittsquerschnitt für Flüssigkeiten durch die Poren des im wesentlichen ringförmigen unteren Teiles des Flächengebildes in der ersten Extremposition ist.

Eine besonders geeignete Ausführungsform der Erfindung verwendet eine Filtereinrichtung, deren Filterkammer ein Volumen von etwa 150 bis 200 ml hat. Die Einlauföffnungen für Flüssigkeiten sind vorzugsweise unterhalb der Entlüftungsöffnungen für entweichende Luft im Oberboden des Deckels der Vakuumkammer angeordnet In einer speziellen bevorzugten Ausführungsform beträgt A ungefähr 24 mm², B ungefähr 66 mm², C ungefähr 300 mm² und D ungefähr 680 mm².

Der freie Querschnitt A setzt sich durch Aufsummieren von allen Entlüftungsöffnungen im Deckel zusammen. Der freie Querschnitt B setzt sich aus allen Einlauföffnungen für die Flüssigkeit zusammen. Bei dem freien Durchlaufquerschnitt C für Luft im oberen Teil des Flächengebildes hat man einen arithmetischen Mittelwert der offenen Filterfläche des Flächengebildes von ca. 42,5% genommen. Hier gibt es eine Spannweite zwischen etwa 30% bis etwa 65%.

Für die Fläche D, d.h. die freie Durchtrittsfläche für Flüssigkeit in dem unteren Bereich des textilen Flächengebildes mit dem größeren Durchmesser hat man einen arithmetischen Mittelwert der offenen Filterfläche des Flächengebildes von ca. 42,5% angenommen. Hier gilt auch eine Spannweite von zwischen etwa 30% bis etwa 65%.

Bei Einhaltung dieses erfindungsgemäß gelehrten Verhältnisses bzw. der Einzelverhältnisse, z. B. A:B=1:2 usw., ist eine einwandfreie Belüftung einerseits und Durchflutung von Flüssigkeit andererseits gewährleistet. Die angegebenen Größenverhältnisse der Poren des textilen Flächengebildes erlauben die Vermeidung von Durchfließproblemen, wobei dann sehr effektive Filtermaterialien mit großen Wirkflächen (kleinen Partikeln) verwendet werden können, ohne daß ein Herausrieseln oder Durchschwemmen von kleinen Partikeln durch die Öffnungen zu befürchten wäre. Wie bereits erwähnt, ist es gemäß der Erfindung ferner vorteilhaft, wenn der oben im Deckel befindliche entfernt gelegene Teil des Flächengebildes in der ersten Extremposition im Abstand von der Oberwand des Deckels bzw. der Filterkammer angeordnet ist. Die Ausbildung eines Luftraumes unter der Oberwand des Deckels bzw. der Filterkammer läßt sich auf diese Art besonders gut erreichen. Ein Abstand zwischen dem besagten Teil des Flächengebildes einerseits und der inneren Oberfläche der Oberwand des Deckels andererseits beträgt bei einem bevorzugten Ausführungsbeispiel etwa 2 mm. Dann hat man einerseits einen maximalen Schwellraum für das Filtermaterial in dem sogenannten Siebraum, und es ist gleichzeitig der im oberen Bereich der Filterkammer befindliche, entfernte Teil des Flächengebildes trockengehalten, so daß dort ein Übergang von Luft zu Luft existiert.

Besonders bevorzugt weist die zweite Ausführungsform der erfindungsgemäßen Filtereinrichtung ein siebartiges Flächengebilde auf, das hydrophile Teile aufweist. Die hydrophilen Teile sorgen dafür, daß, sobald der hydrostatische Flüssigkeitsdruck an dem siebartigen Flächengebilde unter einen bestimmten Wert sinkt, eine vollständige Benetzung des siebartigen Flächengebildes erfolgt und die eingangs erwähnte Segelbildung auftritt. Durch die entstehende Druckdifferenz wird vorzugsweise das siebartige Flächengebilde durch das Gewicht der nachströmenden Flüssigkeit von der ersten Extremposition in Richtung der zweiten Extremposition bewegt. bis es entweder mit der Oberfläche des Filtermaterials oder mit einem entsprechenden Bauteil in Berührung tritt. Die Segelbildung wird durch die Berührung wieder aufgebrochen, und die Flüssigkeit kann nunmehr durch das siebartige Flächengebilde abfließen.

Dafür wird das siebartige Flächengebilde vorzugsweise aus flexiblem und/oder elastischem Material hergestellt. Die verwendete Fadendicke des vorzugsweise textilen Flächengebildes beträgt zwischen 5 und 100 µm, vorzugsweise zwischen 10 und 60 µm.

Es kann ein bahnförmiges, flächiges, flexibles und/oder elastisches Flächengebilde zum Umformen für die Bildung eines siebartigen zumindest teilweise bewegbaren Gebildeteils zum Befestigen innerhalb einer Filterkammer einer Filtereinrichtung für Flüssigkeiten verwendet werden. Vor diesem Umformen kann das z. B. durch Tiefziehen hergestellte flächige, textile Gebilde in Form eines Bogens oder einer Bahn hergestellt werden. Man kann das textile Flächengebilde von einer Rolle abziehen und dann in die gewünschte Gestalt umformen, z. B. Glocke, Quader. Die Poren bzw. Maschen in diesem textilen Flächengebilde bleiben dann nach dem Formen ohne allzu große Dehnung oder Verzerrung. Dadurch bleibt der Siebeffekt gewährleistet.

Nach dem Umformen des textilen Flächengebildes (in die Gestalt einer Glocke oder eines Quaders oder dergleichen) wird das Flächengebilde passend ausgeschnitten oder ausgestanzt und am Umfang z. B. durch Ultraschall mit dem äußeren unteren Rand des Deckels (an seinem freien offenen Ende) verschweißt.

Durch die Erfindung nach der zweiten Ausführungsform wird die Wirkung der Filtereinrichtung in keiner Weise beeinträchtigt. Die Rückhaltewirkung des textilen Flächengebildes für die kleinen Teilchen des Filtermaterials wird aufrecht erhalten, und gleichwohl ist eine Verlangsamung des Durchflusses der Flüssigkeit durch die Filtereinrichtung auch dann ausgeschaltet, wenn der Filterbecher nur teilweise, d.h. wenig gefüllt ist.

Weitere Vorteile, Merkmale und Anwendungsmöglichkeiten der vorliegenden Erfindung ergeben sich aus der folgenden Beschreibung bevorzugter Ausführungsformen in Verbindung mit den anliegenden Zeichnungen. Bei diesen zeigen die Figuren 1 bis 10 die erste Ausführungsform.
- Figur 1: eine Querschnittsansicht durch eine in dem gesamten System angeordnete Filtereinrichtung gemäß der Erfindung, wobei diese Filtereinrichtung die Filterkartusche selbst ist und ein Betriebszustand nach etwa einer Sekunde gezeigt ist,
- Figur 2: vergrößert die Querschnittsansicht der Filtereinrichtung (Filterkartusche) gemäß der Erfindung in dem gleichen Betriebszustand wie bei Figur 1 ,
- Figur 3: eine ähnliche Darstellung wie Figur 1. jedoch im Betriebszustand des Befüllens nach zum Beispiel 3 Sekunden,
- Figur 4: eine ähnliche Ansicht, jedoch im Betriebszustand der Entleerung,
- Figur 5: wiederum eine ähnliche Ansicht und im Betriebszustand der Entleerung,
- Figuren 6 bis 10: eine andere Ausführungsform, bei welcher die Filtereinrichtung nur zu knapp zwei Drittel mit Filtermaterial gefüllt ist, wobei zeigt

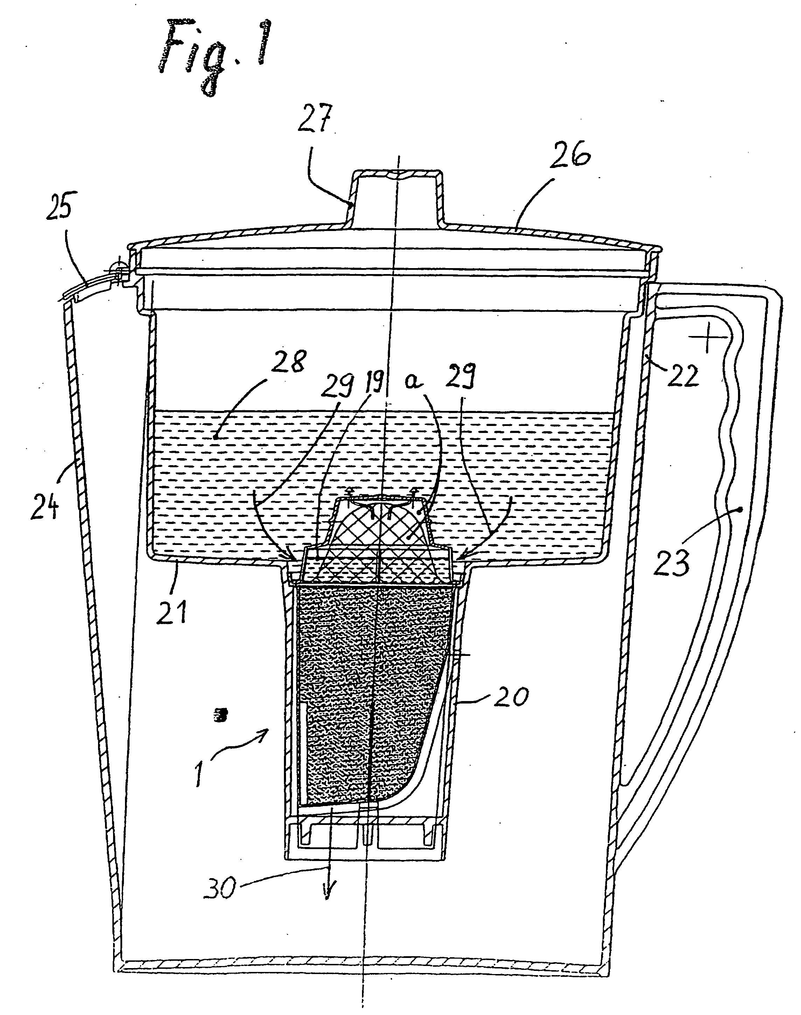

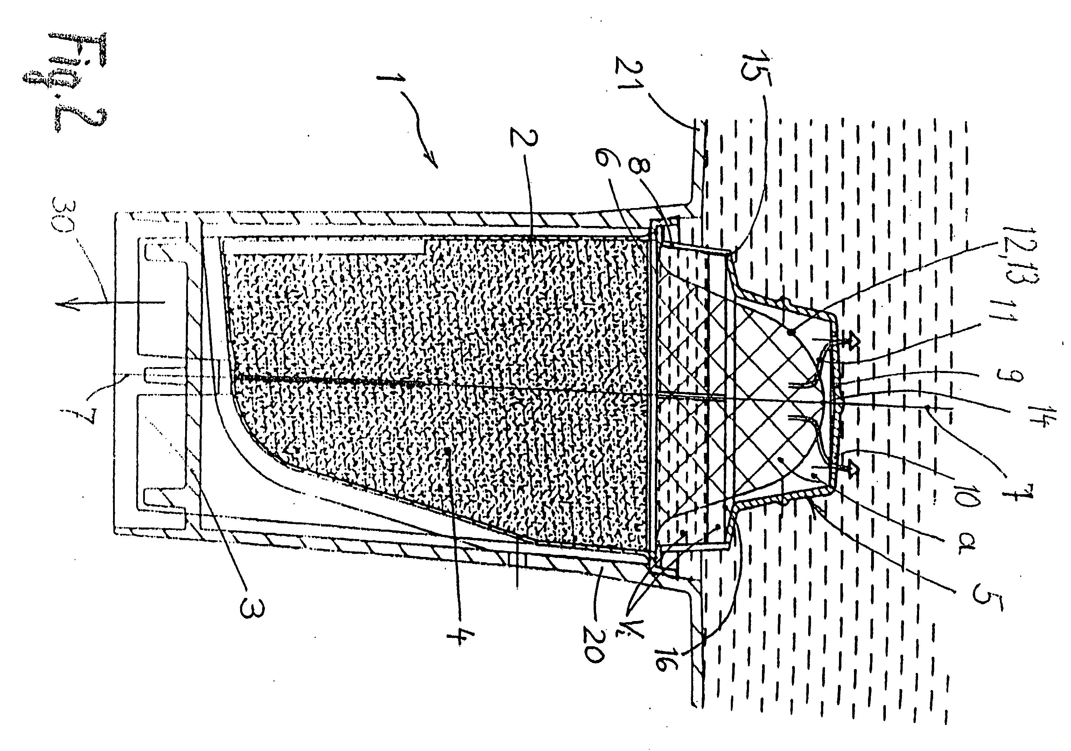

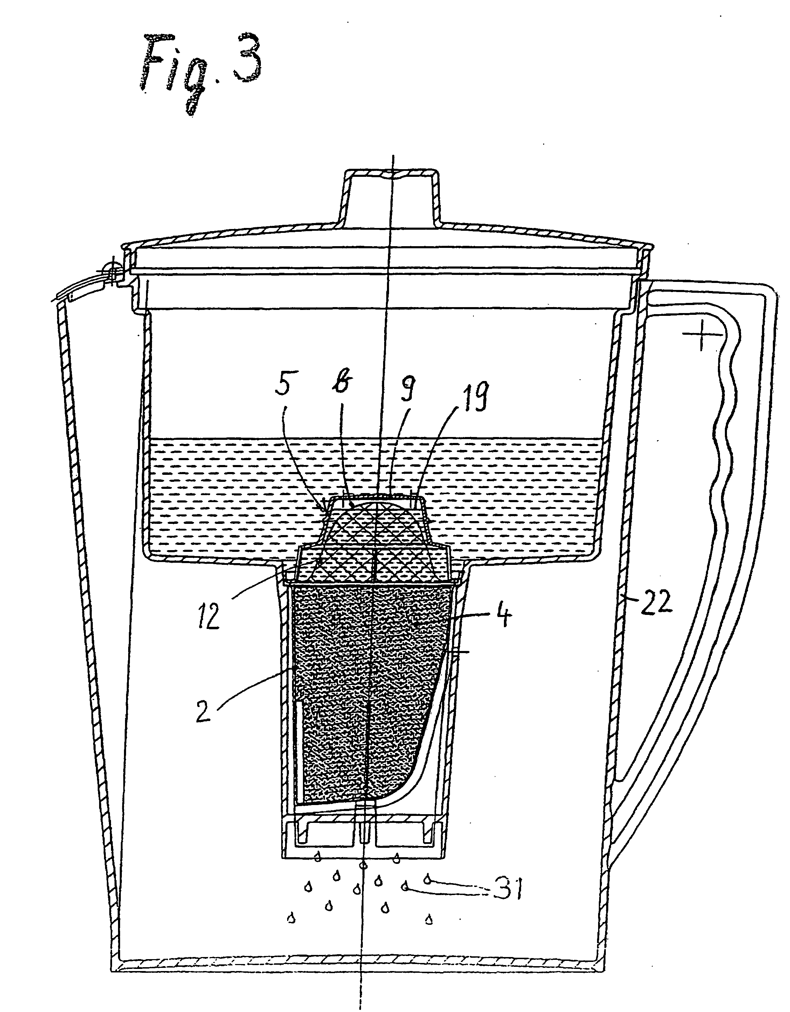

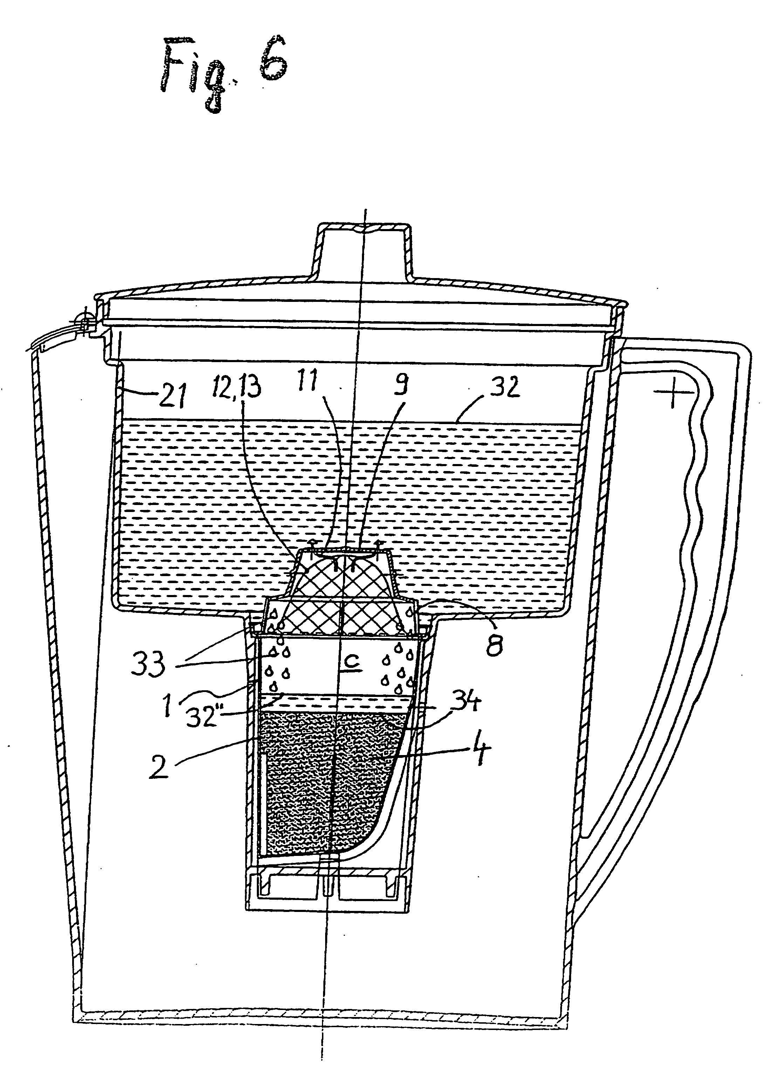

- Figur 6: eine Schnittdarstellung wie in Figur 1 im Betriebszustand der Befüllung nach zum Beispiel 2 Sekunden,

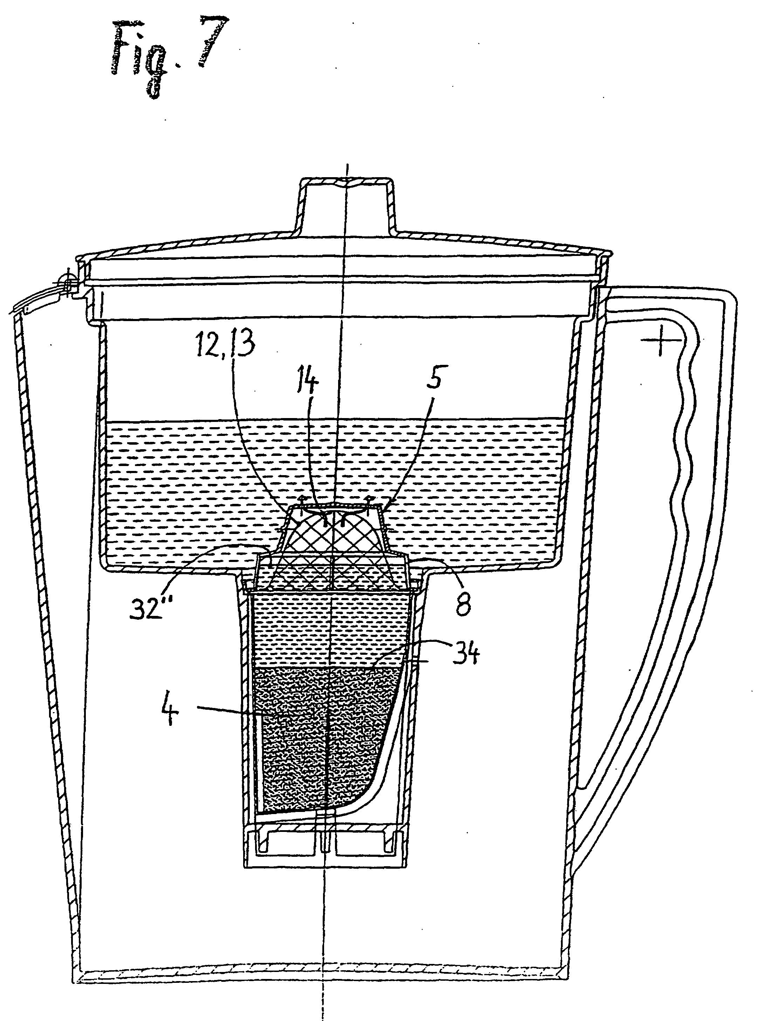

- Figur 7: die gleiche Schnittdarstellung wie Figur 6, jedoch im Betriebszustand der Befüllung nach zum Beispiel 4 Sekunden,

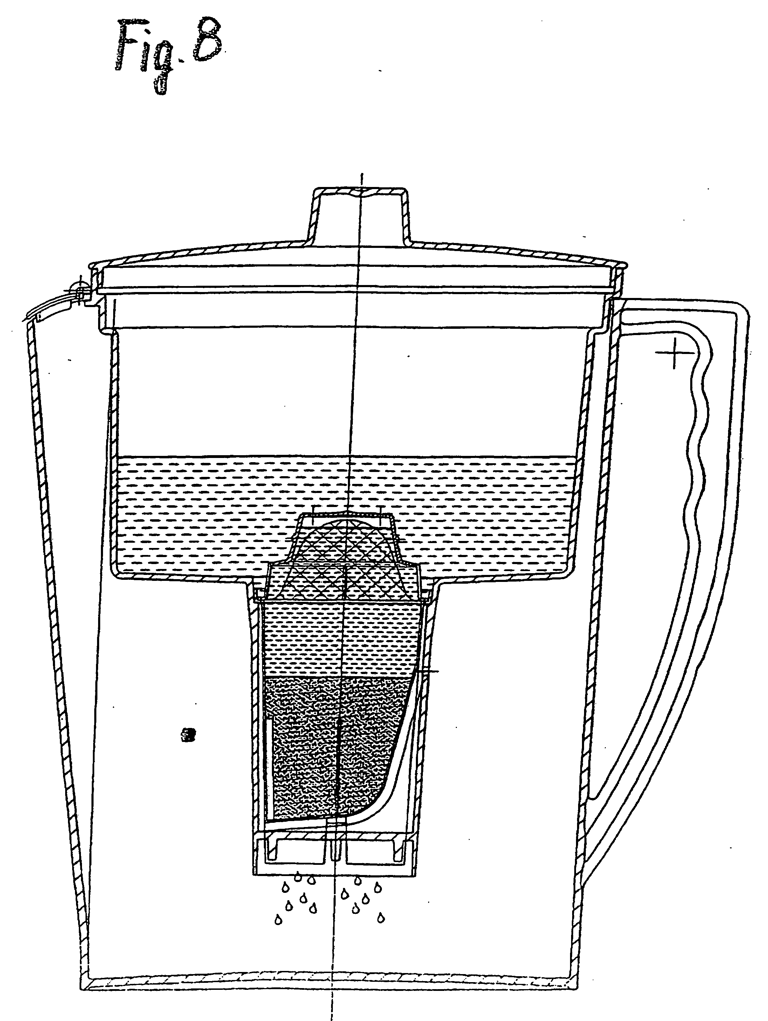

- Figur 8: eine ähnliche Darstellung wie Figur 7, jedoch im Betriebszustand der Befüllung nach zum Beispiel 6 Sekunden,

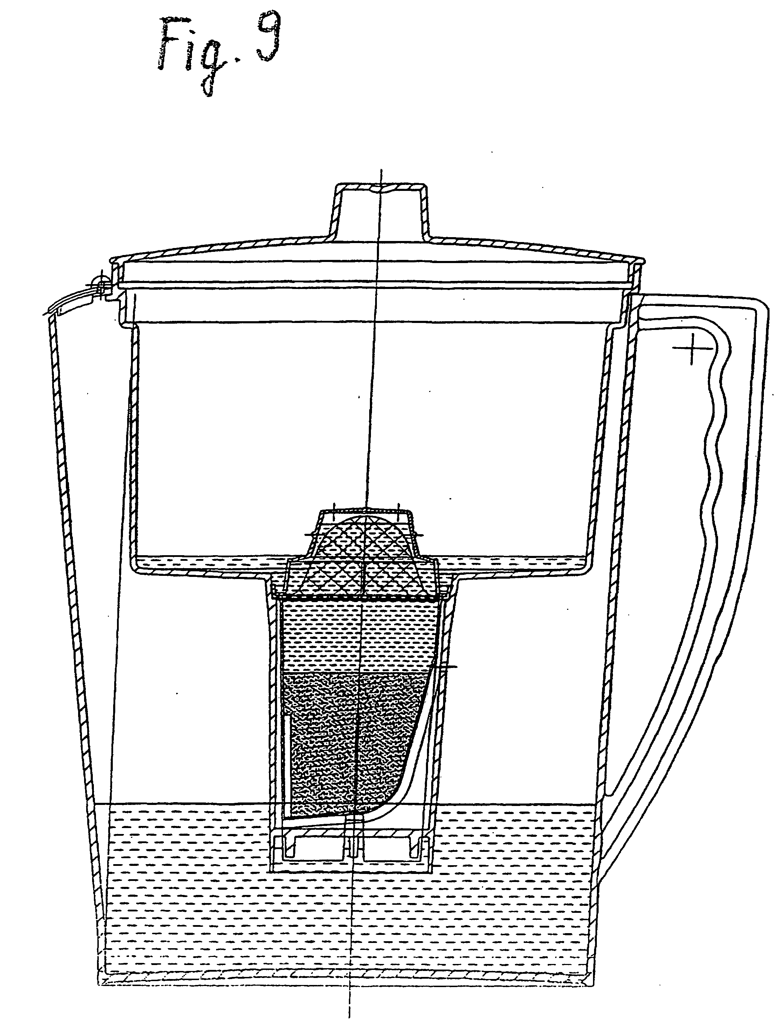

- Figur 9: eine ähnliche Querschnittsdarstellung, jedoch im Betriebszustand der Entleerung, ähnlich wie Figur 4 bei der anderen Ausführungsform,

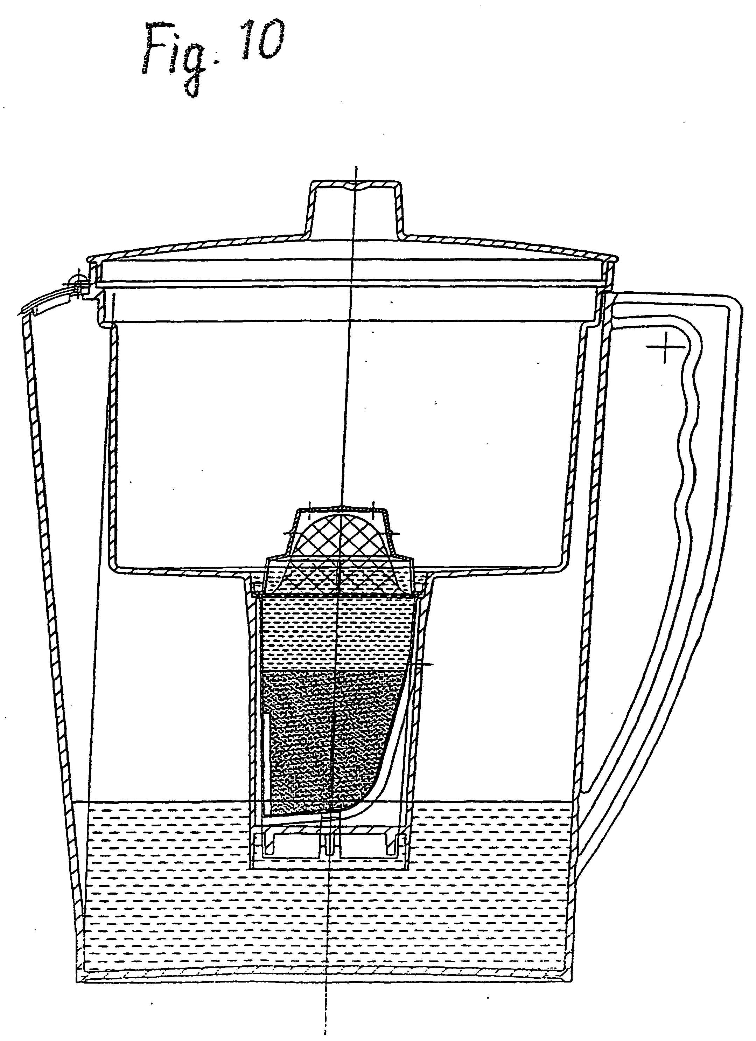

- Figur 10: wiederum eine ähnliche Querschnittsdarstellung der Filtereinrichtung im Betriebszustand der Entleerung (bei der zweiten Ausführungsform mit nur zum Teil gefülltem Filterbecher), ähnlich der Darstellung der Figur 5 bei der ersten Ausführungsform und

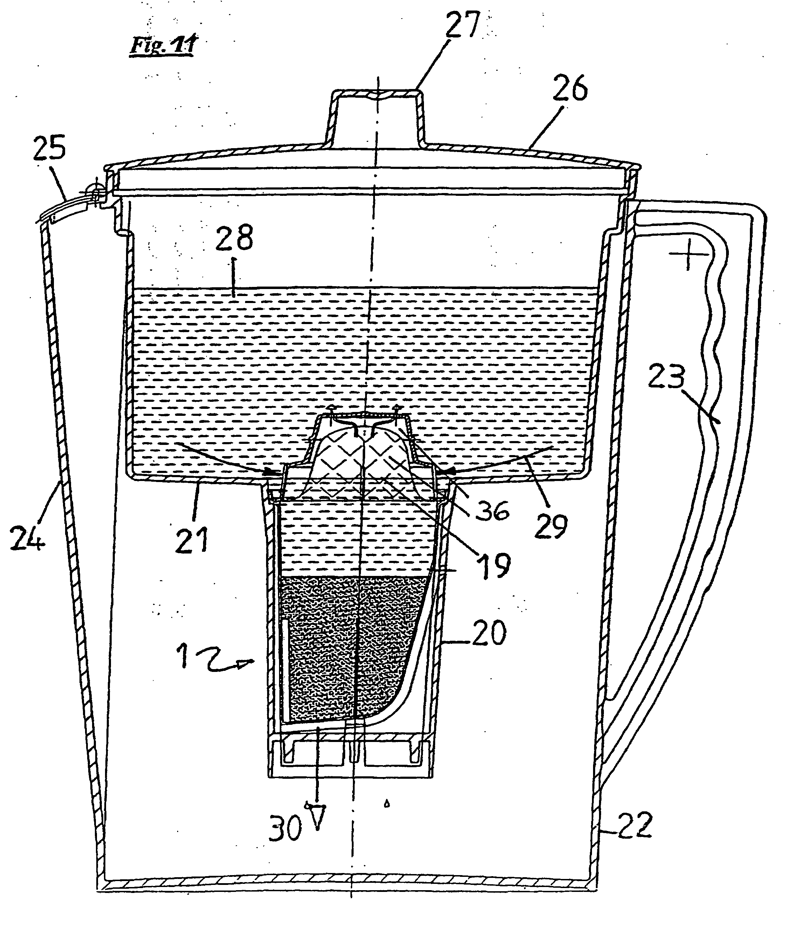

- Figur 11: eine Querschnittsansicht durch eine in einem Gesamtsystem angeordnete Filtereinrichtung in Form einer Filterkartusche in einem ersten Betriebszustand,

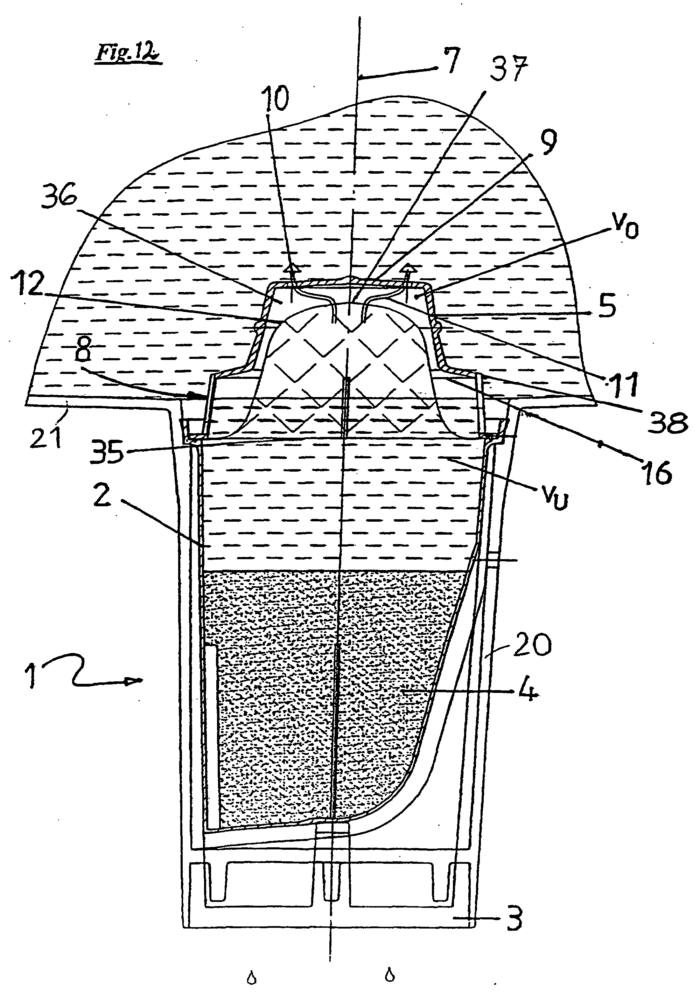

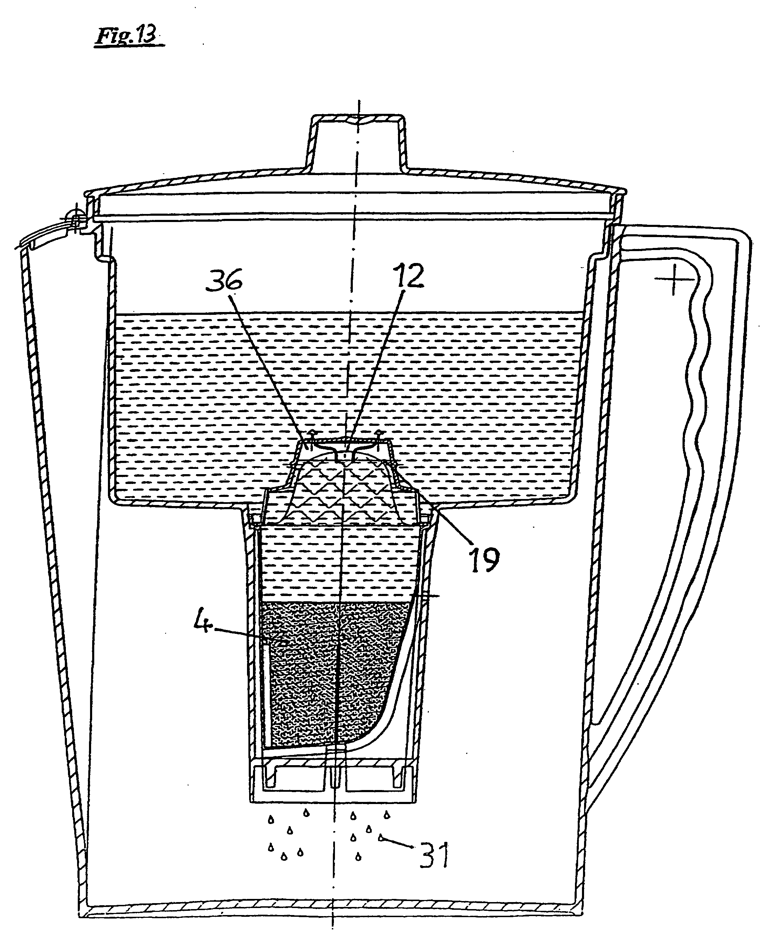

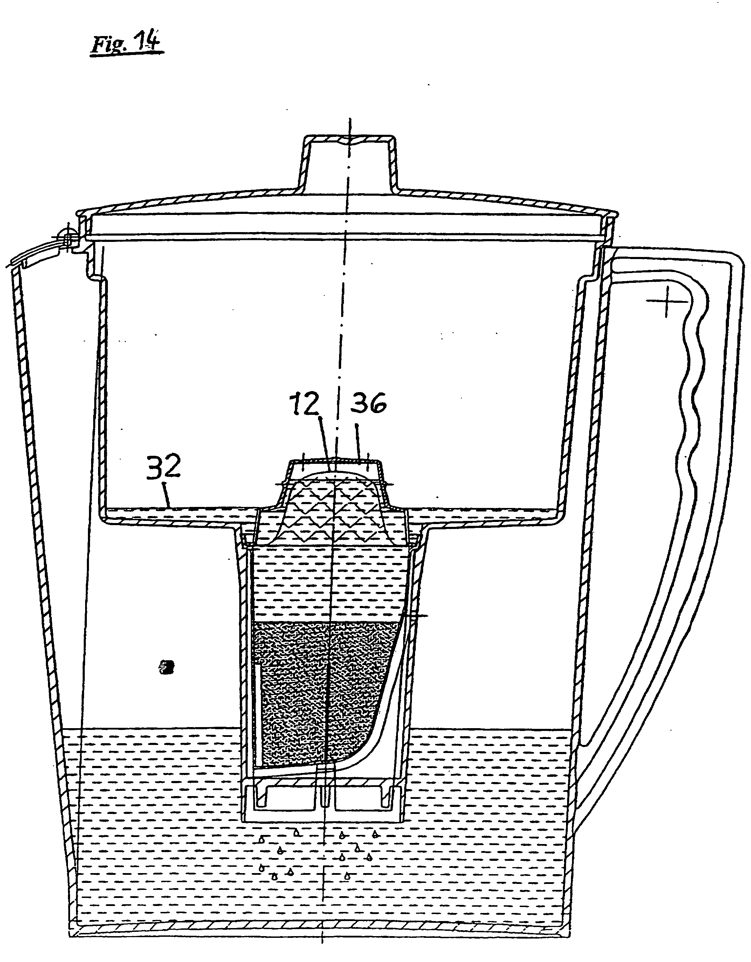

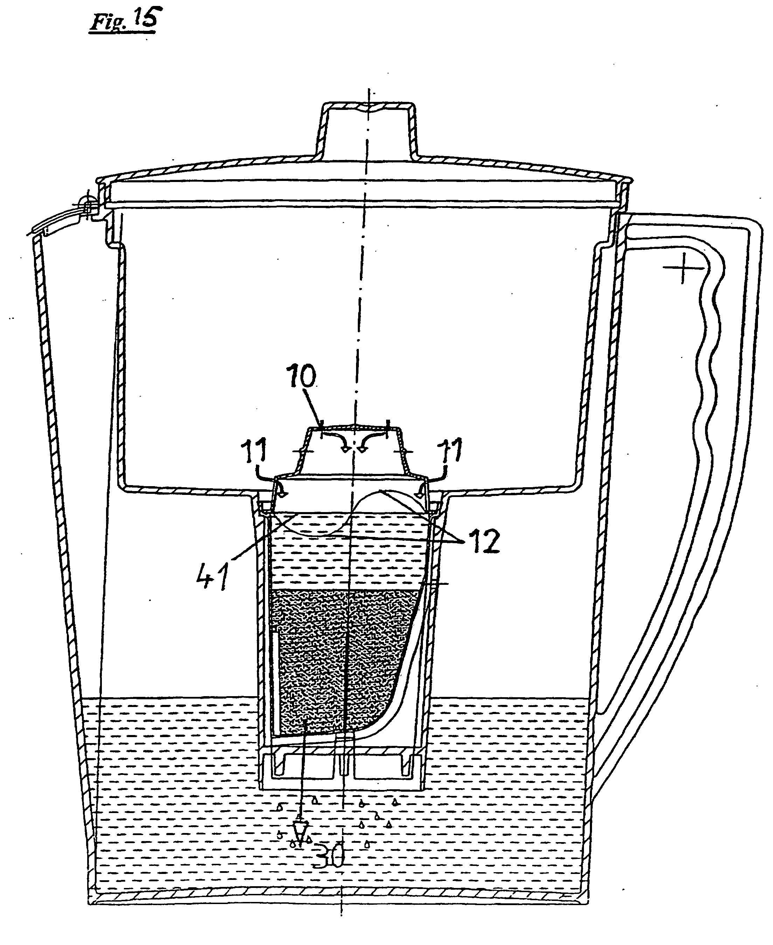

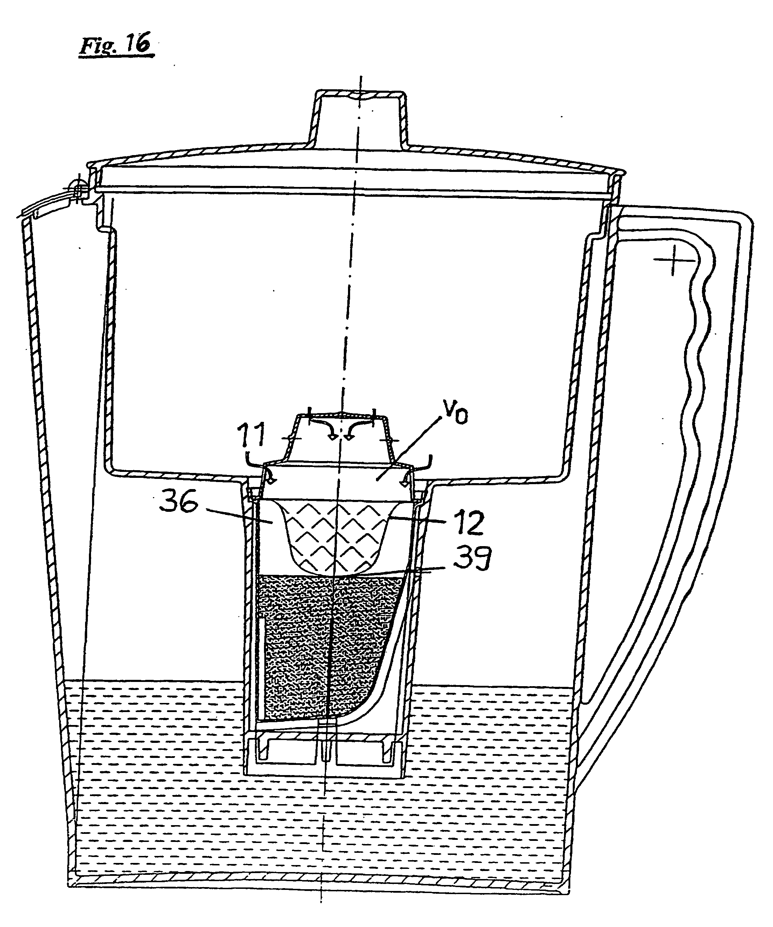

- Figur 12: eine vergrößerte Querschnittsansicht der Filtereinrichtung in Form einer Kartusche der Figur 11,

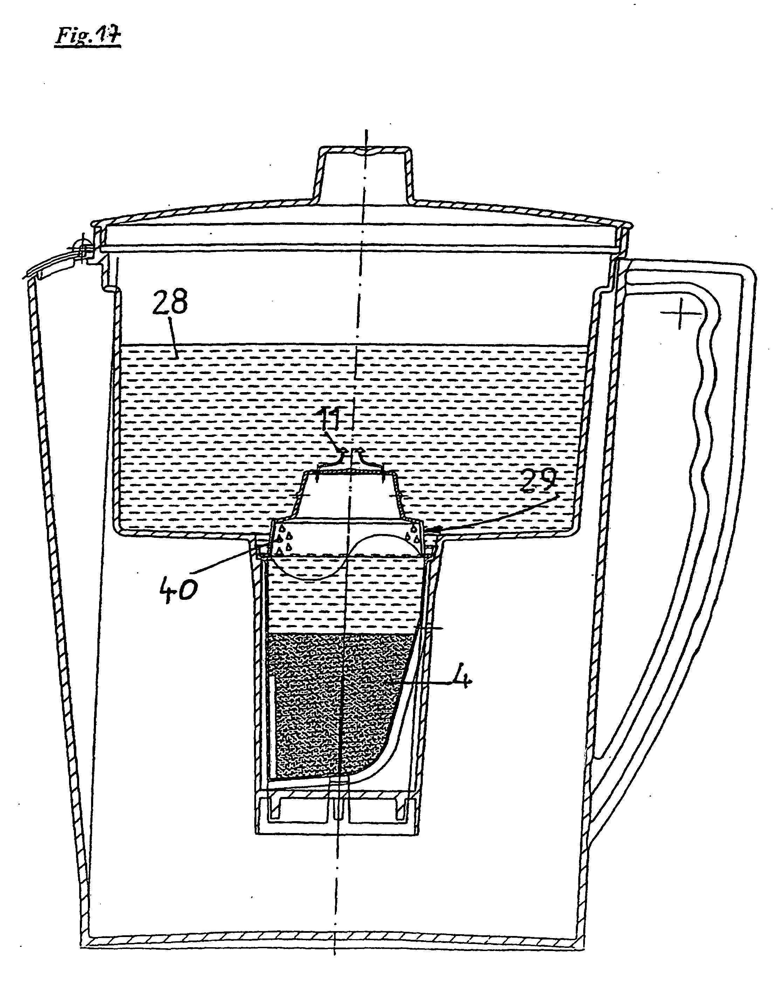

- Figur 13: eine Querschnittsansicht des Gesamtsystems in einem zweiten Betriebszustand,
- Figur 14: eine Querschnittsansicht des Gesamtsystems in einem dritten Betriebszustand,
- Figur 15: eine Querschnittsansicht des Gesamtsystems in einem vierten Betriebszustand,
- Figur 16: eine Querschnittsansicht des Gesamtsystems in einem fünften Betriebszustand und
- Figur 17: eine Querschnittsansicht des Gesamtsystems in einem sechsten Betriebszustand.

Die allgemein mit 1 bezeichnete Filtereinrichtung für Flüssigkeiten gemäß beiden Ausführungsformen der Erfindung sitzt in dem unteren, hülsenförmigen Teil 20 eines Trichters 21. Der Trichter ist oben in eine Auffangkanne 22 eingesetzt, die auf ihrer Rückseite den Griff 23 und auf ihrer Vorderseite die Ausgießtülle 24 mit Ausgießabdeckung 25 hat. Oben ist ein leicht gewölbtes Bedeckungsteil 26 auf dem Trichter 21 aufgesetzt, um das Hereinfallen von Staubteilchen und dergleichen in das Innere des Trichters 21 zu verhindern. Dieses Bedeckungsteil 26 ist von Hand über das erhabene Teil 27 abnehmbar. Das insgesamt in den Figuren 1 und 11 gezeigte Gerät wird zunächst mit Rohwasser 28 gefüllt, welches entsprechend den gebogenen Pfeilen 29 nach unten in die Filtereinrichtung 1 einströmt, um diese unten gemäß Pfeil 30 zu verlassen und in der Auffangkanne 22 aufgefangen zu werden.

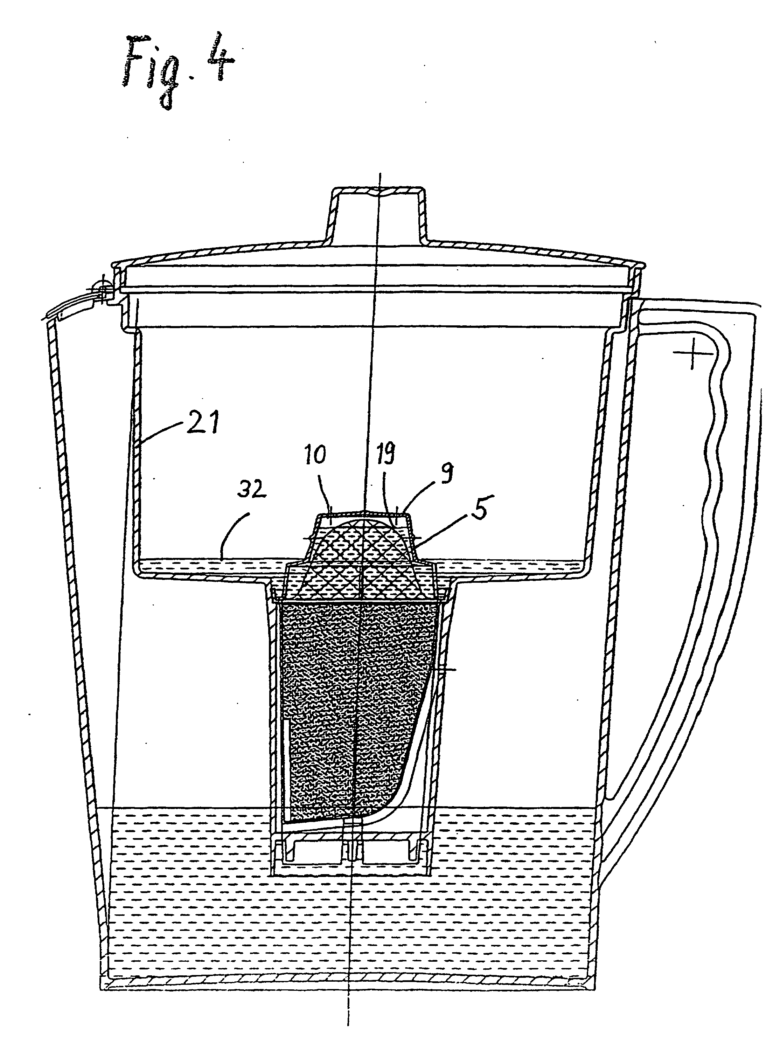

Die allgemein mit 1 bezeichnete Filtereinrichtung wird nun im einzelnen an hand der Figuren 2 und 10 erläutert.

Der Trichter 21 mit der mittig unten angesetzten Hülse 20 nimmt die Filtereinrichtung 1 auf, hauptsächlich den Filterbecher 2, dessen Boden 3 hier nicht dargestellte siebartige Auslaßöffnungen für die Flüssigkeit, das Wasser, hat, damit dieses entlang Pfeil 30 nach unten schwerkraftbetrieben abströmen kann. Der Querschnitt ist hier mittig durch die Filtereinrichtung 1 gelegt, so daß man sich die nicht dargestellten Auslaßöffnungen vor und hinter der Schnittebene zu denken hat. Der Filterbecher 2 ist mit Filtermaterial 4 gefüllt. Im oberen Bereich besteht die Filtereinrichtung 1 aus dem Deckel 5. Längs der Unterkante 6 des Deckels 5 ist dieser mit der Oberkante des Filterbechers 2 verbunden, so daß die Oberkante des Filterbechers 2 mit der Unterkante 6 des Deckels 5 zusammenfällt.

Der Schwerkraftbetrieb der Filtereinrichtung funktioniert dann am besten, wenn die Längsachse 7 der Filtereinrichtung 1, welche mit der Längsachse der Trichterhülse 20 Zusammenfällt, in der Vertikalen, d.h. im Lot liegt. Dies wird einfach dadurch erreicht, daß man die Auffangkanne 22 auf eine horizontale Fläche stellt. Dadurch ergeben sich die Positionen "oben" und "unten". Man erkennt, daß der Deckel 5 oben und der Filterbecher 2 weiter unten bei der Filtereinrichtung 1 vorgesehen sind. Durch die Oberkante des Filterbechers 2 und die Unterkante 6 des Deckels 5 kann man sich im zusammengebauten Zustand der Figuren 2 bzw. 12 eine horizontale Ebene gelegt denken, welche das Volumen des Filtermaterials 4 von dem Innenvolumen Vᵢ bzw. V_{d} innerhalb des Deckels trennt. Der gesamte Raum innerhalb des Deckels bis zu dieser durch seine Unterkante 6 gelegten Ebene, siehe Figur 2, ist dieses Innenvolumen Vᵢ bzw. V_{d} des Deckels 5.

Der Deckel 5 ist in seinem unteren, verbreiterten Teil am Umfang mit vier schlitzartigen Einlauföffnungen 8 für das Wasser (die Flüssigkeit) versehen. Die vier Einlauföffnungen sind jeweils um 90° im Abstand zueinander am Umfang des Deckels 5 versetzt vorgesehen. Im übrigen ist die jeweils dazwischen befindliche teilringförmige Fläche des erweiterten unteren Teils des Deckels geschlossen.

Nach oben schließt sich der obere, engere Teil des Deckels 5 wie ein umgekehrter Becher an, wobei man in der Oberwand 9 des Deckels 5 die zwei im Abstand voneinander angeordneten Entlüftungsöffnungen 10 für entweichende Luft erkennt. Die gebogenen Pfeile 11 veranschaulichen die durch diese Entlüftungsöffnungen 10 herausströmende Luft, vorzugsweise beim Einströmen von Flüssigkeit durch die Schlitze 8.

Zwischen dem Filterbecher 2 und dem Deckel 5 ist ein siebartiges, mit 12 bezeichnetes Flächengebilde angebracht, das bei der zweiten Ausführungform nach den Figuren 11 bis 17 das Innenvolumen Vᵢ des Filterbechers in die beiden Teilvolumina Vₒ und Vᵤ teilt. Dieses hat in der gezeigten ersten Ausführungsform der Figuren 1 bis 10 und in den Betriebszuständen der Figuren 11 bis 14 die Gestalt einer Glocke. Diese Glocke ist das in das Innenvolumen Vᵢ bzw. V_{d} des Deckels 5 vorstehende Gebildeteil 13. Bei den in den Figuren 1 bis 10 gezeigten Ausführungsformen ist das gesamte textile Flächengebilde 12 so gewölbt, daß es gleich dem vorstehenden Gebildeteil 13 wird, weil das gesamte textile Flächengebilde 12 in den Innenraum des Deckels 5 nach oben vorsteht. In einem anderen Betriebszustand bei der zweiten Ausführungsform, wie er beispielsweise in Figur 16 dargestellt ist, ist das siebartige Flächengebilde 12 bedingt durch seine nur sehr geringe Eigenstabilität nach unten auf das Filtermaterial 4 "geklappt" bzw. herabgesunken und nimmt, abhängig von dem Füllvolumen des Filtermaterials 4, maximal seine zuvor beschriebene Glockenform spiegelbildlich um die Unterkante 6 des Deckels 5 wieder an. In den Figuren 15 und 17 ist ein Zwischenzustand des textilen Flächengebildes 12 zwischen seiner oberen und unteren Extremposition dargestellt.

Bei der ersten Ausführungsform der Erfindung nach den Figuren 1 bis 10 ist der am weitesten von dem weiter unten angeordneten Filterbecher 2 entfernte Teil des textilen Flächengebildes 12 mit 14 bezeichnet. Es handelt sich hier um den Bereich um den höchsten Punkt des Flächengebildes 12 bzw. des vorstehenden Gebildeteils 13. Dieser entfernte, obere Teil des Flächengebildes liegt deutlich sichtbar im Abstand von der inneren Oberfläche der Oberwand 9 des Deckels 5. Das textile Flächengebilde 12 steht derart in Form des Gebildeteiles 13 nach oben in den Deckel 5 vor, daß sich sowohl innen als auch außen, d.h. auf beiden Seiten des textilen Flächengebildes 12 in dessen oberem Teil 14 Luft befindet. Hier sind verschiedene Lufträume entsprechend den unterschiedlichen Betriebszuständen dargestellt, und in den Figuren 1 und 2 ist der noch recht große (abhängig von dem Befüllungszustand) Luftraum mit a bezeichnet. Dieser Luftraum a der Figuren 1 und 2 befindet sich sowohl innerhalb als auch außerhalb des textilen Flächengebildes 12 bzw. des vorstehenden Gebildeteils 13.

Die höchstgelegenen Enden 15 der Einlauföffnungen 8 für das Wasser sind durch eine horizontale Ebene 16 miteinander verbunden. Diese Verhältnisse verdeutlichen, daß oberhalb dieser horizontalen Ebene 16 durch die höchstgelegenen Enden 15 der Einlauföffnungen 8 sowohl die ganz oben in der Oberwand 9 des Deckels 5 angebrachten Entlüftungsöffnungen 10 als auch der obere Teil 14 des Flächengebildes 12 angeordnet sind.

Es wird zunächst der Betrieb der ersten Ausführungsform nach den Figuren 1 und 3 bis 5 beschrieben. Diese Ausführungsform ist dadurch gekennzeichnet, daß der Filterbecher 2 ganz mit Filtermaterial 4 gefüllt ist, zum Beispiel also ein Materialvolumen von 140 ml vorgibt. Im Betriebszustand der Figur 1 wird der Trichter 21 mit Wasser gefüllt. Das Wasser läuft durch die vier Einlauföffnungen 8 entsprechend den gebogenen Pfeilen 29 in das Innere der Filterkartusche (Filtereinrichtung) 1 ein. Oberhalb des Filtermaterials 4 baut sich nun der Wasserpegel 19 auf und hat nach etwa 1 Sekunde die in Figur 1 gezeigte Höhe erreicht. Gleichzeitig entweicht die Luft gemäß den gebogenen Pfeilen 11 nach oben durch die Entlüftungsschlitze 10. Es handelt sich hier um diejenige Luft, die sich oberhalb des Filtermaterials 4 befindet. Da der Luftdruck innerhalb der Filterkartusche 1 größer ist als der Druck des Rohwassers 28 außerhalb der Filterkartusche 1, kann kein Wasser von außen durch die Entlüftungsöffnungen 10 in die Filterkartusche hineinlaufen.

Ersichtlich ist der obere Teil 14 des textilen Flächengebildes 12 über den Einlauföffnungen 8, d.h. über der horizontalen Ebene 16 durch die höchstgelegenen Enden 15 der Einlauföffnungen 8 angeordnet. Folglich kann es nicht zu einem sofortigen Überströmen der oberen Hälfte des textilen Flächengebildes in der hier gezeigten Glockenform kommen. Dies bewirkt ein optimales Entlüften innerhalb der kartuschenförmigen Filtereinrichtung 1.

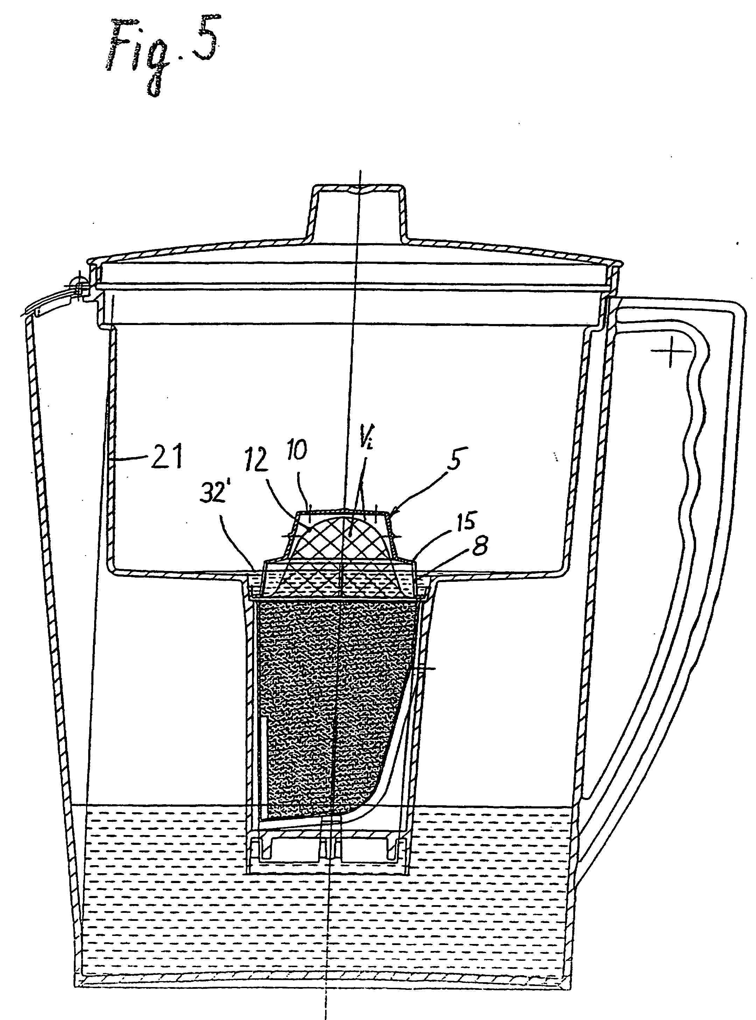

In Figur 3 ist zwar immer noch der Betriebszustand der Befüllung, hier aber nach etwa 3 Sekunden seit Beginn gezeigt. Der Wasserpegel 19 im Deckel 5 ist nun im Vergleich zu dem Stand der Figuren 1 und 2 höher. Dieser Wasserpegel 19 erstreckt sich sowohl im Inneren des textilen Flächengebildes 12 als auch außerhalb desselben, jedoch innerhalb des Deckels 5. Das Niveau des Wasserpegels 19 ist in Figur 3 auf etwa 3 mm unterhalb der Oberwand 9 des Deckels 5 angestiegen. Man sieht den viel kleineren Luftraum b der Figur 3. Unten im Filterbecher 2 ist inzwischen auch das Filtermittel 4 vollständig mit Wasser geflutet. Unten tritt das Wasser aus der Filtereinrichtung 1, die unten ebenfalls mit einem eingespritzten Flächengebilde ausgestaltet ist, in Form der dargestellten Tropfen 31 aus. Das Wasser wird in der Auffangkanne 22 unten gesammelt.

Figur 4 zeigt den Betriebszustand der Entleerung, weil der Wasserpegel 32 im Trichter 21 auf ein im Vergleich zu den Figuren 1 bis 3 wesentlich tieferes Niveau abgesunken ist. Der Wasserpegel 19 im Deckel 5 ist jedoch gegenüber dem Zustand in Figur 3 (Befüllen) unverändert. Dadurch, daß die oberen Entlüftungsöffnungen 10 in der Oberwand 9 des Deckels 5 nicht mehr mit Wasser bedeckt sind, weil der Wasserpegel 32 unterhalb des Niveaus der Oberwand 9 liegt, kann sich der Luftraum b (Figur 3) verkleinern. Während der Abstand des Wasserpegels 19 im Deckel auch in Figur 4 mit 3 mm gezeigt ist, könnte sich dieser Abstand auf 1 mm verkleinern. Das ist jedoch nicht immer der Fall. In Figur 4 ist deshalb diese Verkleinerung des Luftraumes nicht dargestellt. Figur 5 zeigt wiederum den Betriebszustand der Entleerung, wobei hier aber die Entleerung schon gegenüber dem Zustand der Figur 4 weiter fortgeschritten ist. Der Wasserpegel 32' im Trichter 21 ist gegenüber dem Wasserpegel 32 in Figur 4 niedriger. Der Wasserpegel 32' liegt jetzt schon unterhalb des höchstgelegenen Endes 15 der Wassereinlauföffnung 8 im unteren Teil des Deckels 5. Dadurch kann Luft aus dem Raum in dem Trichter 21 nicht nur durch die Entlüftungsöffnungen 10 sondern auch durch den Oberteil der Einlauföffnungen 8 für das Wasser in das Innenvolumen Vᵢ des Deckels 5 eintreten, d.h. sowohl innerhalb als auch außerhalb des textilen Flächengebildes 12. Durch diesen zusätzlichen Lufteintritt durch die Öffnungen 10 und insbesondere zusätzlich die Öffnungen 8 wird ein schnelles Absinken des Wasserpegels 32' innerhalb des Deckels 15 bewirkt. In Figur 5 ist jedoch derjenige Zustand gezeigt, bei dem sich der Wasserpegel innerhalb des Deckels 5 bereits auf gleichem Niveau zu dem Wasserpegel 32' im Trichter 21 außerhalb des Deckels befindet.

Die Figuren 6 bis 10 zeigen eine zweite Ausführungsform der Filtereinrichtung 1 gemäß der Erfindung, bei welcher der Filterbecher 2 nur zur Hälfte bis zwei Drittel mit Filtermaterial 4 gefüllt ist. Nimmt man an, daß bei der Ausführungsform der Figuren 1 bis 5 das Füllvolumen an Filtermaterial 140 ml beträgt, so beträgt das Füllvolumen bei der zweiten Ausführungsform nach den Figuren 6 bis 10 95 ml.

Figur 6 zeigt wieder den Betrieb des Befüllens nach 2 Sekunden ab Füllbeginn. Der Trichter 21 ist wieder mit Wasser bis zum Pegel 32 gefüllt. Das durch Wassertropfen 33 in der Filtereinrichtung 1 dargestellte Wasser läuft durch vier Einlauföffnungen 8 in das Innere der als Filterkartusche ausgebildeten Filtereinrichtung 1. Durch das Einfüllen von nur 95 ml Filtermaterial 4 erreicht dieses ein Füllniveau 34 im Filterbecher 2. Oberhalb dieses Füllniveaus 34 baut sich der Wasserpegel 32" im Filterbecher 2 auf. Gleichzeitig entweicht die Luft, welche sich oberhalb des Filtermaterials 4 in der Filtereinrichtung 1 befindet, durch die oberen Entlüftungsöffnungen 10 in der Oberwand 9 des Deckels 5 gemäß den Pfeilen 11.

Der Druck im Luftraum c im oberen Teil des Filterbechers 2 und im Deckel 5 ist größer als der außerhalb des Deckels 5 befindliche Wasserdruck. Dadurch kann kein Wasser von außen durch die Entlüftungsöffnungen 10 durch die Oberwand 9 des Deckels 5 in den Deckel hinein strömen. Da außerdem der Hauptteil des textilen Flächengebildes 12, d.h. der glockenförmige vorstehende Gebildeteil 13, über den Einlauföffnungen 8 für Wasser liegt, kann es nicht zu einem sofortigen "Überströmen" des oberen Teils des textilen Flächengebildes 12 kommen. Dadurch wird ein optimales Entlüften innerhalb der kartuschenförmigen Filtereinrichtung 1 bewirkt.

Figur 7 zeigt den Betriebszustand der Befüllung nach etwa 4 Sekunden. Durch das kleine Füllvolumen von nur etwa 95 ml kann es, je nachdem wie trocken/feucht das Filtermaterial 4 ist, schon zu einem Wasseraustritt aus dem Filterbecher 2 kommen, während sich der Wasserpegel 32" im Siebbecher und dann darüber im Deckel 5 aufbaut. Dies kann man in Figur 7 nicht erkennen.

In dem Raum oberhalb des Füllniveaus 34 des Filtermaterials 4 baut sich von unten nach oben der Wasserpegel auf, der in Figur 7 hier auf dem Niveau des Wasserpegels 32" gezeigt ist. Der obere Teil des textilen Flächengebildes 12 bzw. des vorstehenden Gebildeteiles 13 ist von dem durch die Einlauföffnungen 8 eintretenden Wasser unberührt. Der von dem Filterbecher 2 am weitesten entfernte Teil 14, d.h. der höchste Punkt 14 des vorstehenden Gebildeteiles 13 des Flächengebildes 12, hat also auf beiden Seiten einen kleinen Luftraum, so daß von innerhalb des Flächengebildes 12 nach außerhalb desselben (alles innerhalb des Deckels 5) ein Übergang von Luft zu Luft und damit ein guter Luftaustritt existiert. Deshalb kommt es zu dem optimalen Entlüften innerhalb der kartuschenförrnigen Filtereinrichtung 1.

Die Figuren 8, 9 und 10 sind mit den Figuren 3, 4 und 5 der ersten Ausführungsforrn zu vergleichen. Abgesehen von der größeren Menge Filtermaterial 4 bei der ersten Ausführungsform sind die Betriebsumstände sonst die gleichen.

Nun wird die zweite Ausführungsform nach den Figuren 11 bis 17 beschrieben.

Die Ränder des siebartigen Flächengebildes 12 bilden eine Referenzebene, die mit der Bezugszahl 35 versehen ist. Der in der ersten Extremposition des siebartigen Gebildes am weitesten von der Referenzebene 35 entfernte Teil des Flächengebildes 12 ist mit der Bezugszahl 37 bezeichnet. Es handelt sich hier um den Bereich in der Nähe des höchsten Punktes des Flächengebildes 12. Dieser entfernte, nach oben geklappte Teil des Flächengebildes 12 ist deutlich sichtbar derart angeordnet, daß ein Abstand zwischen der inneren Oberfläche der Oberwand 9 des Deckels 5 und dem Bereich 37 des Flächengebildes 12 besteht. Dadurch ist gewährteistet, daß das Flächengebilde 12 derart nach oben in den Deckel 5 vorsteht, daß sich sowohl innen als auch außen, d.h. auf beiden Seiten des textilen Flächengebildes 12, in dessen oberem Teil 37 Luft befindet. Zur Verdeutlichung ist in den Figuren 11 und 12 der aus Luft bestehende Hohlraum innerhalb der Filterkartusche mit 36 bezeichnet worden. Die Größe des eingeschlossenen Luftraums hängt von dem Betriebszustand der Filtereinrichtung ab, wie im folgenden noch deutlich werden wird. Wie aus den Figuren 11 und 12 deutlich zu entnehmen ist, befindet sich der Luftraum 36 in diesem Betriebszustand sowohl innerhalb als auch außerhalb des textilen Flächengebildes 12.

Die höchstgelegenen Enden 38 der Einlauföffnungen 8 für das Wasser sind durch eine horizontale Ebene 16 miteinander verbunden. Diese Verhältnisse verdeutlichen, daß sowohl die ganz oben in der Oberwand 9 des Deckels 5 angebrachten Entlüftungsöffnungen 10 als auch der obere Teil 37 des Flächengebildes 12 oberhalb dieser horizontalen Ebene 16 durch die höchstgelegenen Enden 38 der Einlauföffnung 8 angeordnet sind.

Im folgenden wird der Betrieb dieser zweiten Ausführungsform der erfindungsgemäßen Filtereinrichtung nach den Figuren 11 bis 17 beschrieben. Um den Filtervorgang zu starten, wird zunächst Rohwasser 28 in den Trichter 21 eingefüllt. Dieser Betriebszustand ist in den Figuren 11 und 12 dargestellt. Das Wasser läuft durch die vier Einlauföffnungen 8 entsprechend den gebogenen Pfeilen 29 in das Innere der Filtereinrichtung (Filterkartusche) 1 ein. Oberhalb des Filtermaterials 4 stellt sich ein Wasserpegel 19 ein, der zu Beginn des Filtervorganges rasch ansteigt. Etwa drei Sekunden nach dem Einfüllen des Rohwassers 28 in den Trichter 21 erreicht der Wasserpegel 19 die in Figur 11 gezeigte Höhe. Dadurch entsteht in der Filterkartusche 1 ein leichter Überdruck, der dafür sorgt, daß die ursprünglich in der Filterkartusche enthaltene Luft entsprechend den gebogenen Pfeilen 11 nach oben durch die Entlüftungsschlitze 10 entweicht. Bedingt dadurch, daß die Einlauföffnungen unterhalb der Entlüftungsöffnungen 10 angeordnet sind, ist der Luftdruck innerhalb der Filterkartusche 1 größer als der hydrostatische Druck des Rohwassers 28 außerhalb der Filterkartusche 1 in Höhe der Entlüftungsöffnungen 10. Somit kann kein Wasser von außen durch die Entlüftungsöffnungen 10 in die Filterkartusche hineinlaufen.

Wie bereits erwähnt, ist in der ersten Extremposition des siebartigen Flächengebildes der obere Teil 37 über den Einlauföffnungen 8, d. h. über der horizontalen Ebene 16, die durch die höchstgelegenen Enden 38 der Einlauföffnungen 8 bestimmt ist, angeordnet. Daher wird auch in diesem Betriebszustand das siebartige Flächengebilde nicht völlig von Rohwasser überströmt. Vielmehr verbleibt der obere Teil 37 des textilen Flächengebildes 12 innerhalb des Luftraumes 36, so daß hier ein Übergang Luft zu Luft bestehen bleibt. Durch den oberen Teil 37 des siebartigen Gebildes 12 wird ein optimales Entlüften innerhalb der kartuschenförmigen Filtereinrichtung 1 bewirkt.

Der in den Figuren 11 und 12 gezeigte Betriebszustand wird unmittelbar nach dem Filtrationsstart erreicht, sofern das siebartige Flächengebilde 12 völlig trocken ist. In Figur 13 ist ein weiterer Betriebszustand der erfindungsgemäßen Filtereinrichtung gezeigt. In der dargestellten Situation sind etwa fünf Sekunden seit Beginn des Filtrationsvorganges verstrichen, d.h. in Figur 13 wird eine Situation beschrieben, die zeitlich etwa 2 Sekunden nach der in Figur 11 gezeigten Situation entsteht. Deutlich zu erkennen ist, daß der Wasserpegel 19 im Deckel 5 nun im Vergleich mit dem Wasserpegel der Figuren 11 und 12 angestiegen ist. Dieser Wasserpegel 19 erstreckt sich durch das siebartige Flächengebilde 12, so daß er sowohl im Inneren des siebartigen Flächengebildes 12 als auch außerhalb desselben verläuft, jedoch innerhalb des Deckels 5, d.h. auch in diesem Zustand existiert ein Luftpolster bzw. Luftraum, der in dieser Figur ebenfalls die Bezeichnung 36 trägt. Das Niveau des Wasserpegels 19 ist in diesem Betriebszustand bis zu einem Niveau von etwa 3 mm unterhalb der Oberwand 9 des Deckels 5 angestiegen. Der Luftraum 36 ist gegenüber dem Luftraum 36 der Figuren 11 und 12 deutlich verkleinert. In diesem Betriebszustand ist das Filtermittel vollständig mit Wasser durchdrängt, so daß im unteren Bereich aus der Filtereinrichtung 1 aus den Auslaßöffnungen Wasser in Form der mit der Bezugszahl 31 versehenen dargestellten Tropfen austritt. Das Wasser wird in der Auffangkanne 22 gesammelt.

In Figur 14 ist ein weiterer Betriebszustand der erfindungsgemäßen Filtereinrichtung zu sehen. Mittlerweile ist der Trichter 21 nahezu leergelaufen. Der Wasserpegel 32 im Trichter 21 ist daher auf ein im Vergleich zu den Figuren 11 und 13 wesentlich tieferes Niveau abgesunken. Der Wasserpegel 19 im Deckel 5 ist gegenüber dem Zustand in Figur 14 nahezu unverändert. Dadurch, daß die oberen Entlüftungsöffnungen 10 in der Oberwand 9 des Deckels 5 nicht mehr mit Wasser bedeckt sind, weil der Wasserpegel 32 unterhalb dem Niveau der Oberwand 9 liegt, entsteht an den Entlüftungsöffnungen ein Luft zu Luft-Übergang, so daß abhängig von der Filtriergeschwindigkeit der Luftraum 36 sich kurzfristig weiter verkleinern kann. Es bleibt jedoch in allen Betriebszuständen zumindest ein kleiner Luftraum 36 bestehen. Da die beschriebene weitere Verengung des Luftraumes nicht immer beobachtbar ist, ist diese in Figur 14 nicht dargestellt.

In Figur 15 ist schließlich ein Betriebszustand gezeigt, bei dem der Filter 21 bereits völlig entleert ist. In diesem Zustand befindet sich lediglich innerhalb der Filterkartusche 1 noch Rohwasser. Der Wasserpegel 41 im Filterbecher 1 ist gegenüber dem Wasserpegel 32 in Figur 14 deutlich abgesenkt. Der Wasserpegel 41 liegt in diesem Betriebszustand bereits unterhalb des höchstgelegenen Endes 38 der Wassereinlauföffnungen 8 im unteren Teil des Deckels 5. Dadurch kann Luft aus dem Trichtervolumen des Trichters 21 sowohl durch die Entlüftungsöffnungen 10 als auch durch die Einlauföffnungen 8 in das Volumeninnere V_{d} des Deckels 5 eintreten. Dadurch wird das Absinken des Wasserpegels 41 beschleunigt. Das textile Flächengebilde 12 ist derart gefertigt, daß es hydrophil wirkt. infolgedessen werden alle mit dem zu filternden Wasser in Kontakt tretenden Oberflächen des textilen Flächengebildes 12 benetzt. Die Benetzung erwirkt im Zusammenspiel mit der bei Flüssigkeiten bekannten Oberflächenspannung die Bildung eines Feuchtefilmes innerhalb der Poren des textilen Flächengebildes 12. In der Gewebetechnik wird hierbei von "Segelbildung" gesprochen.

Durch diese Segelbildung werden die einzelnen Poren des siebartigen Gewebes quasi abgeschottet. Diese Segel können im allgemeinen auch nach dem vollständigen Abfluß des Wassers über einen verhältnismäßig langen Zeitraum von beispielsweise etwa 30 Minuten erhalten bleiben, so daß das textile Flächengebilde 12 eine geschlossene Glocke bildet, die der Luftzirkulation in der Filterkartusche entgegenwirkt.

Sinkt der Wasserpegel 41 im Filterbecher 1 weiterhin in Richtung Oberkante des Füllmaterials ab, so entsteht unterhalb des textilen Flächengebildes ein Unterdruck, so daß das flexible siebartige Flächengebilde 12 quasi zum Einsturz gebracht wird und dieses mit dem sinkenden Wasserpegel 41 in Strömungsrichtung nach unten gerissen wird. Dieser Zustand ist schematisch in Figur 15 gezeigt.

Es versteht sich, daß bei manchen Ausführungsformen das siebartige Gebilde 12 bereits während eines früheren Betriebszustandes absinken kann. Auch wenn dies den Filtervorgang etwas verzögert, wird die erfindungsgemäße Aufgabe auch dann gelöst.

In Figur 16 ist schließlich der Endzustand nach Beendigung des Filtrationsvorganges dargestellt. Das textile Flächengebilde 12 ist nun nach unten gewölbt, so daß es mit der Oberfläche des Filtermaterials 4 in Berührung tritt. Die Kontaktstelle, die je nach Füllhöhe des Filtermaterials auch eine Kontaktfläche sein kann, trägt hier die Bezugszahl 39.

Aufgrund dieses Kontaktes 39 werden eine genügend große Anzahl von Segeln aus den Poren des siebartigen Flächengebildes 12 aufgebrochen, so daß für den ungehinderten Übergang einer Restströmung von Luft und Wasser in das Füllmaterial 4 ein freier Querschnitt aus der Flächensumme der offenen Poren entsteht.

Es wird deutlich, daß die durch das sich bewegende siebartige Flächengebilde entstehende Volumenänderung des Teilvolumens, in dem das Filtermaterial sich befindet, auf die Expansion des Filtermaterials aufgrund von Feuchteschwankungen abgestimmt werden sollte.

In Figur 17 ist schließlich erneut der Beginn des Filtrationsvorganges gezeigt. Figur 17 unterscheidet sich von Figur 11 im wesentlichen dadurch, daß in Figur 17 das siebartige Flächengebilde 12 noch naß ist, so daß eine Mehrheit der Poren des textilen Flächengebildes 12 durch Segelbildung verschlossen sind.

Zunächst befindet sich das textile Flächengebilde 12 noch wie in Figur 16 gezeigt in Kontakt mit dem Filtermaterial 4. Durch diese Kontaktstelle 39 fließt Wasser 40 solange in das Filtermaterial 4, bis aufgrund des gestiegenen Feuchtegehaltes eine luftdichte Barriere entsteht, die das Abfließen der in der Filtereinheit 1 befindlichen Restluft durch die Auslaßöffnungen durch das Filtermaterial 4 verhindert.

Folglich entsteht unterhalb des abgedichteten siebartigen Flächengebildes 12 aus Figur 16 ein Überdruck. Das siebartige Flächengebilde 12 wird durch diesen Überdruck, wie in Figur 17 ersichtlich, nach oben gedrückt und geht in die in Figur 11 dargestellte erste Extremposition zurück.

Durch den starken hydrostatischen Druckanstieg des Rohwassers im Filter 21 werden die Segel in dem siebartigen Flächengebilde 12 aufgebrochen, so daß im wesentlichen der Betriebszustand, der bereits in Figur 11 beschrieben wurde, wiederhergestellt wird. Die beschriebene Abfolge der Betriebszustände wiederholt sich nun.

### Bezugszeichenliste

- 1: Filtereinrichtung
- 2: Filterbecher
- 3: Boden des Filterbechers
- 4: Filtermaterial
- 5: Deckel
- 6: Unterkante des Deckels 5
- 7: Längsachse der Filtereinrichtung
- 8: Einlauföffnungen für Flüssigkeit
- 9: Oberwand des Deckels
- 10: Entlüftungsöffnung
- 11: gebogener Pfeil für Strömungsrichtung der Luft
- 12: siebartiges Flächengebilde
- 13: vorstehendes Gebildeteil
- 14: der entfernte obere Teil des textilen Flächengebildes
- 15: höchstgelegenes Ende der Einlauföffnung 8
- 16: horizontale Ebene durch 15
- 19: Wasserpegel im Deckel 5
- 20: hülsenförmigerTeii des Trichters
- 21: Trichter
- 22: Auffangkanne
- 23: Griff der Auffangkanne
- 24: Ausgießtülle
- 25: Ausgießabdeckung
- 26: gewölbtes Bedeckungsteil
- 27: erhabener Teil
- 28: Rohwasser
- 29: gebogener Pfeil (Einströmrichtung)
- 30: Pfeil (Ausströmrichtung)
- 31: austretende Wassertropfen
- 32: Wasserpegel im Trichter 21 oben
- 32': Wasserpegel im Trichter 21 unten
- 32": Wasserpegel im Filterbecher
- 33: Wassertropen in Filtereinrichtung
- 34: Fülliniveau im Filterbecher
- 35: Referenzebene
- 36: Luftraum
- 37: der von der Referenzebene am weitesten entfernte Teil des siebartigen Flächengebildes
- 38: höchstgelegenes Ende der Einlauföffnung
- 39: Kontaktstelle bzw. Kontaktfläche
- 40: eintretendes Rohwasser
- 41: Wasserpegel im Filterbecher
- a: größerer Luftraum im Deckel gemäß Fig. 1
- b: kleinerer Luftraum im Deckel gemäß Fig. 3
- c: Luftraum in der Filtereinrichtung gemäß Fig. 6
- Vᵢ: Innenvolumen des Deckels
- Vᵤ: unteres Teilvolumen
- Vₒ: oberes Teilvolumen

## Patentansprüche

1. Filtereinrichtung (1) für Flüssigkeiten mit einem zumindest teilweise mit Filtermaterial (4) gefüllten Filterbecher (2), dessen Boden (3) wenigstens eine siebartige Auslassöffnung für die Flüssigkeit hat, und mit einem Deckel (5), der ein Innenvolumen (V,) vorgibt und der mit wenigstens einer Einlauföffnung (8) für die Flüssigkeit und mit mindestens einer Entlüftungsöffnung (10) für entweichende Luft versehen und flüssigkeitsdicht mit dem Filterbecher (2) verbunden ist, wobei zwischen dem Filterbecher (2) und dem Deckel (5) ein siebartiges Flächengebilde (12) angebracht ist, **dadurch gekennzeichnet,**
**dass** das siebartige Flächengebilde (12) einteilig und geschlossen ist, und
**dass** mindestens zeitweise während des Filtrationsbetriebes wenigstens ein Gebildeteil (13) des siebartigen Flächengebildes (12) in das Innenvolumen (Vᵢ) des Deckels (5) vorsteht und dabei im Abstand von der Oberwand (9) des Deckels (1) angeordnet ist.

2. Filtereinrichtung nach Anspruch 1, **dadurch gekennzeichnet, dass** das siebartige Flächengebilde ein textiles Flächengebilde ist.

3. Filtereinrichtung nach Anspruch 1 oder 2, **dadurch gekennzeichnet,**
**dass** der oben im Deckel (5) befindliche, entfernte Teil (13) des Flächengebildes (12) und die Entlüftungsöffnung (10) oberhalb des höchstgelegenen Endes (15) der Einlauföffnung (8) angeordnet sind.

4. Filtereinrichtung nach einem der Ansprüche 1 bis 3, **dadurch gekennzeichnet,**
**dass** das in das Innenvolumen (Vᵢ) des Deckels (5) vorstehende Gebildeteil (13) des Flächengebildes (12) wenigstens teilweise gewölbt ist.

5. Filtereinrichtung nach einem der Ansprüche 1 bis 4, **dadurch gekennzeichnet,**
**dass** das vorstehende Gebildeteil (13) des Flächengebildes (12) die Gestalt einer Kugelkappe hat und im unteren, äußeren Bereich am oberen Rand des Filterbechers (2) und am unteren Rand (6) des Deckels (5) befestigt ist.

6. Filtereinrichtung nach einem der Ansprüche 1 bis 5, **dadurch gekennzeichnet,**
**dass** das Flächengebilde (12) ein Gewebe, Gewirke, Vlies oder geformtes Kunststoffteil ist und dass vorzugsweise die Porengröße des Flächengebildes (12) im Bereich von 50 µm bis 300 µm und vorzugsweise 80 µm bis 200 µm liegt.

7. Filtereinrichtung nach einem der Ansprüche 1 bis 6, **dadurch gekennzeichnet,**
**dass** das Verhältnis der fluidtechnischen Querschnittsflächen A : B : C : D mit einer Toleranz von etwa ± 50% ungefähr gleich 1 : 2 : 10 : 20 ist, wobei
A = der freie gesamte Durchtrittsquerschnitt der Entlüftungsöffnungen (10) im Deckel (5);
B = der freie gesamte Durchtrittsquerschnitt der Einlauföffnungen (8) für die Flüssigkeit im Deckel (5);
C = der projizierte freie, gesamte, für die Entlüftung dienende Durchtrittsquerschnitt der Poren des oben im Deckel (5) befindlichen Teiles (13) des Flächengebildes (12); und
D = der freie, gesamte Durchtrittsquerschnitt für Flüssigkeit durch die Poren des ringförmigen, unteren Mantelteiles des Flächengebildes (12) ist.

8. Filtereinrichtung nach einem der Ansprüche 1 bis 7, **dadurch gekennzeichnet,**
**dass** das durch das Flächengebilde (12) bereitgestellte Innenvolumen (Vᵢ) ≥ 5% des Füllvolumens des Filtermaterials (4) im Filterbecher (2) ist.

9. Filtereinrichtung nach einem der Ansprüche 1 bis 8, **dadurch gekennzeichnet,**
**dass** der oben im Deckel (5) befindliche, entfernte Teil (13) des Flächengebildes (12) wenigstens im oberen Bereich hydrophobes oder hydrophobiertes Material aufweist.

10. Filtereinrichtung nach einem der Ansprüche 1 bis 9, **dadurch gekennzeichnet,**
**dass** der untere Teil des Flächengebildes (12) im Bereich der Einlauföffnungen (8) für den Durchtritt der Flüssigkeit hydrophile Teile aufweist.

11. Filtereinrichtung nach Anspruch 1, wobei das siebartige Flächengebilde (12) derart angebracht ist, dass es zusammen mit den Wänden des Filterbechers (2) ein Volumen (Vᵤ) bildet, in dem sich das Filtermaterial (4) befindet,
**dadurch gekennzeichnet,**
**dass** das siebartige Flächengebilde (12) zumindest teilweise bewegbar ist, so dass es zwei Extrempositionen und dazwischenliegende Zwischenpositionen einnehmen kann, wobei beim Übergang von der ersten zur zweiten Extremposition das Volumen (Vᵤ) um ein Differenzvolumen ΔV erniedrigt wird.

12. Filtereinrichtung (1) nach Anspruch 11, **dadurch gekennzeichnet,**
**dass** die Fläche einer durch den Rand des Flächengebildes (12) gelegten Referenzebene (35) kleiner ist als die tatsächliche Fläche des Flächengebildes (12).

13. Filtereinrichtung nach Anspruch 11 oder 12, **dadurch gekennzeichnet,**
**dass** die mindestens eine Entlüftungsöffnung auf derselben Seite des siebartigen Flächengebildes (12) angeordnet ist wie die Einlauföffnung (8).

14. Filtereinrichtung (1) nach einem der Ansprüche 11 bis 13, **dadurch gekennzeichnet,**
**dass** das Differenzvolumen ΔV mindestens 1%, vorzugsweise mindestens 5%, besonders bevorzugt mindestens 10% des Füllvolumens des Filtermaterials (4) im Filterbecher (2) beträgt.

15. Filtereinrichtung (1) nach einem der Ansprüche 11 bis 14, **dadurch gekennzeichnet,**
**dass** das Differenzvolumen ΔV mindestens 1 %, vorzugsweise mindestens 5%, besonders bevorzugt mindestens 10% des Volumens des Volumens Vᵤ beträgt.

16. Filtereinrichtung (1) nach einem der Ansprüche 11 bis 15, **dadurch gekennzeichnet,**
**dass** das siebartige Flächengebilde (12) in der zweiten Extremposition mit der entsprechend eingestellten Oberfläche des Filtermaterials (4) und/oder einem weiteren Bauteil in Berührung kommt.

17. Filtereinrichtung (1) nach einem der Ansprüche 12 bis 16, **dadurch gekennzeichnet,**
**dass** der von der Referenzebene (35) entfernte Teil (37) des Flächengebildes (12) in der ersten Extremposition die Wand des Deckels (5) nicht berührt.

18. Filtereinrichtung (1) nach einem der Ansprüche 11 bis 17, **dadurch gekennzeichnet,**
**dass** die Filtereinrichtung (1) schwerkraftgetrieben ist, wobei in der ersten Extremposition des Gebildes (12) zumindest ein Teil des Gebildes (12) höher liegt als derselbe Teil in der zweiten Extremposition.

19. Filtereinrichtung (1) nach Anspruch 18, **dadurch gekennzeichnet,**
**dass** in der ersten Extremposition der von der Referenzebene (35) entfernte Teil des Flächengebildes (12) und die Entlüftungsöffnung (10) oberhalb des höchstgelegenen Endes der Einlauföffnung (8) angeordnet sind.

20. Filtereinrichtung (1) nach einem der Ansprüche 11 bis 19, **dadurch gekennzeichnet,**
**dass** das Flächengebilde (12) ein Gewebe, Gewirke, Gelege, Vlies oder geformtes Kunststoffteil ist und dass vorzugsweise die Porengröße des Flächengebildes (12) im Bereich von 50 µm bis 300 µm und besonders bevorzugt zwischen 80 µm bis 200 µm liegt.

21. Filtereinrichtung (1) nach einem der Ansprüche 18 bis 20, **dadurch gekennzeichnet,**
**dass** das Verhältnis der fluidtechnischen Querschnittsflächen A : B : C : D mit einer Toleranz von etwa ± 50%, vorzugsweise etwa ± 25%, ungefähr gleich 1 : 2 : 10 : 20 ist, wobei
A = der freie gesamte Durchtrittsquerschnitt der Entlüftungsöffnungen (10);
B = der freie gesamte Durchtrittsquerschnitt der Einlauföffnungen (8) für die Flüssigkeit ;
C = der freie, gesamte, für die Entlüftung dienende Durchtrittsquerschnitt der Poren des Flächengebildes (12) in der ersten Extremposition; und
D = der freie, gesamte Durchtrittsquerschnitt für Flüssigkeit durch die Poren des im wesentlichen ringförmigen unteren Teiles des Flächengebildes (12) in der ersten Extremposition ist.

22. Filtereinrichtung (1) nach einem der Ansprüche 11 bis 21, **dadurch gekennzeichnet,**
**dass** das siebartige Flächengebilde (12) hydrophile Teile aufweist.

23. Filtereinrichtung (1) nach einem der Ansprüche 20 bis 22, **dadurch gekennzeichnet,**
**dass** die Fadendicke des textilen Flächengebildes (12) zwischen 5 und 100 µm, vorzugsweise zwischen 10 und 60 µm, liegt.

24. Filtereinrichtung (1) nach einem der Ansprüche 11 bis 23, **dadurch gekennzeichnet,**
**dass** das Flächengebilde (12) aus flexiblem und/oder elastischem Material hergestellt ist.

## Claims

1. A filtering device (1) for liquids, having a filtering cup (2) at least partially filled with filtering material (4) and the base (3) of which has at least one sieve-like outlet opening for the liquid, and having a lid (5) that defines an internal volume (Vᵢ) and is provided with at least one inlet opening (8) for the liquid and with at least one ventilation opening (10) for escaping air and is connected in a liquid-tight manner to the filtering cup (2), a sieve-like sheet material (12) being disposed between the filtering cup (2) and the lid (5), **characterised in that** the sieve-like sheet material (12) is in one piece and is closed, and **in that** at least at times during the filtration operation at least one structural part (13) of the sieve-like sheet material (12) protrudes into the internal volume (Vᵢ) of the lid (5) and at the same time is arranged spaced from the top wall (9) of the lid (5).

2. A filtering device according to claim 1, **characterised in that** the sieve-like sheet material is a textile sheet material.

3. A filtering device according to claim 1 or 2, **characterised in that** the remote part (13) of the sheet material (12) located at the top in the lid (5) and the ventilation opening (10) are arranged above the highest end (15) of the inlet opening (8).

4. A filtering device according to any one of claims 1 to 3, **characterised in that** the structural part (13) of the sheet material (12) protruding into the internal volume (Vᵢ) of the lid (5) is at least partially curved.

5. A filtering device according to any one of claims 1 to 4, **characterised in that** the protruding structural part (13) of the sheet material (12) is in the shape of a spherical cap and in its lower, outer region is fixed to the upper edge of the filtering cup (2) and to the lower edge (6) of the lid (5).

6. A filtering device according to any one of claims 1 to 5, **characterised in that** the sheet material (12) is a woven fabric, knitted fabric, fleece or shaped plastics material part and **in that** preferably the pore size of the sheet material (12) is in the range from 50 µm to 300 µm and preferably 80 µm to 200 µm.

7. A filtering device according to any one of claims 1 to 6, **characterised in that** the ratio of the fluid-technical cross-sectional areas A : B : C : D with a tolerance of about ± 50% is approximately 1 : 2 : 10 : 20, wherein
A = the free, total flow cross-section of the ventilation openings (10) in the lid (5);
B = the free, total flow cross-section of the inlet openings (8) for the liquid in the lid (5);
C = the projected free, total flow cross-section of the pores, serving for ventilation, of the part (13) of the sheet material (12) located at the top in the lid (5); and
D = the free, total flow cross-section for liquid through the pores of the annular, lower sleeve part of the sheet material (12).

8. A filtering device according to any one of claims 1 to 7, **characterised in that** the internal volume (Vᵢ) provided by the sheet material (12) ≥ 5% of the filling volume of the filtering material (4) in the filtering cup (2).

9. A filtering device according to any one of claims 1 to 8, **characterised in that** the remote part (13) of the sheet material (12) located at the top in the lid (5) comprises, at least in the upper region, hydrophobic or waterproofed material.

10. A filtering device according to any one of claims 1 to 9, **characterised in that** the lower part of the sheet material (12) comprises hydrophilic portions in the region of the inlet openings (8) for the passage of liquid.

11. A filtering device according to claim 1, wherein the sieve-like sheet material (12) is arranged so that together with the walls of the filtering cup (2) it forms a volume (Vᵤ) in which the filtering material (4) is located, **characterised in that** the sieve-like sheet material (12) is at least partly movable, so that it can assume two extreme positions and intermediate positions between them, the volume (Vᵤ) being reduced by a difference volume ΔV during the transition from the first to the second extreme position.

12. A filtering device according to claim 11, **characterised in that** the area of a reference plane (35) located through the edge of the sheet material (12) is smaller than the actual area of the sheet material (12).

13. A filtering device according to claim 11 or 12, **characterised in that** the at least one ventilation opening is arranged on the same side of the sieve-like sheet material (12) as the inlet opening (8).

14. A filtering device (1) according to any one of claims 11 to 13, **characterised in that** the difference volume ΔV is at least 1%, preferably at least 5%, especially preferably at least 10% of the filling volume of the filtering material (4) in the filtering cup (2).

15. A filtering device (1) according to any one of claims 11 to 14, **characterised in that** the difference volume ΔV is at least 1%, preferably at least 5%, especially preferably at least 10% of the volume of the volume Vᵤ.

16. A filtering device (1) according to any one of claims 11 to 15, **characterised in that**, in the second extreme position, the sieve-like sheet material (12) comes into contact with the correspondingly adjusted surface of the filtering material (4) and/or with a further component.

17. A filtering device (1) according to any one of claims 12 to 16, **characterised in that**, in the first extreme position, the part (37) of the sheet material (12) remote from the reference plane (35) does not touch the wall of the lid (5).

18. A filtering device (1) according to any one of claims 11 to 17, **characterised in that** the filtering device (1) is gravity-driven, wherein, in the first extreme position of the sheet material (12), at least a part of the sheet material (12) is higher than the same part in the second extreme position.

19. A filtering device (1) according to claim 18, **characterised in that**, in the first extreme position, the part of the sheet material (12) remote from the reference plane (35) and the ventilation opening (10) are arranged above the highest end of the inlet opening (8).

20. A filtering device (1) according to any one of claims 11 to 19, **characterised in that** the sheet material (12) is a woven fabric, a knitted fabric, a random fibre structure, fleece or shaped plastics material part, and **in that** preferably the pore size of the sheet material (12) is in the range from 50 µm to 300 µm and especially preferably between 80 µm and 200 µm.

21. A filtering device (1) according to any one of claims 18 to 20, **characterised in that** the ratio of the fluid-technical cross-sectional areas A : B : C : D with a tolerance of about ± 50%, preferably, about ± 25%, is approximately 1 : 2 : 10 : 20, wherein
A = the free, total flow cross-section of the ventilation openings (10);
B = the free, total flow cross-section of the inlet openings (8) for the liquid;
C = the free, total flow cross-section of the pores, serving for ventilation, of the sheet material (12) in the first extreme position; and
D = the free, total flow cross-section for liquid through the pores of the substantially annular, lower part of the sheet material (12) in the first extreme position.

22. A filtering device (1) according to any one of claims 11 to 21, **characterised in that** the sieve-like sheet material (12) comprises hydrophilic portions.

23. A filtering device (1) according to any one of claims 20 to 22, **characterised in that** the filament thickness of the textile sheet material (12) is between 5 and 100 µm, preferably between 10 and 60 µm.

24. A filtering device (1) according to any one of claims 11 to 23, **characterised in that** the sheet material (12) is manufactured from flexible and/or resilient material.

## Revendications

1. Dispositif de filtration (1) pour des liquides, avec un pichet à filtre (2) rempli au moins partiellement d'un matériau filtrant (4), dont le fond (3) présente au moins une ouverture d'évacuation du genre d'un tamis, pour le liquide, et avec un couvercle (5) prédéterminant un volume intérieur (Vᵢ) et muni d'au moins une ouverture d'alimentation (8) pour le liquide et d'au moins une ouverture de désaération (10) pour l'air s'échappant, et relié de façon étanche au liquide au pichet à filtre (2), sachant qu'entre le pichet à filtre (2) et le couvercle (5) est montée une structure de surface (12) du genre d'un tamis, **caractérisé en ce que**
la structure de surface (12) du genre d'un tamis est réalisée d'une seule pièce et fermée, et
**en ce qu'**au moins par moments, pendant le fonctionnement en filtration, au moins une partie de structure (13) de la structure de surface (12) du genre d'un tamis est en saillie dans le volume intérieur (Vᵢ) du couvercle (5) et est alors disposée à distance de la paroi supérieure (9) du couvercle (1).

2. Dispositif de filtration selon la revendication 1, **caractérisé en ce que** la structure de surface du genre d'un tamis est une structure de surface tactile.

3. Dispositif de filtration selon la revendication 1 ou 2, **caractérisé en ce que**
la partie éloignée (13) se trouvant dans le couvercle (5) de la structure de surface (12) et l'ouverture de désaération (10) sont disposées au-dessus de l'extrémité (15) placée le plus haut de l'ouverture d'admission (8).

4. Dispositif de filtration selon l'une des revendications 1 à 3, **caractérisé en ce que**
la partie de structure (13), en saillie dans le volume intérieur (Vᵢ) du couvercle (5), de la structure de surface (12), est au moins partiellement incurvée.

5. Dispositif de filtration selon l'une des revendications 1 à 4, **caractérisé en ce que**
la partie de structure (13) en saillie de la structure de surface (12) a la forme d'un capuchon sphérique et est fixée dans la zone extérieure inférieure sur le bord supérieur du pichet à filtre (2) et sur le bord inférieur (6) du couvercle (5).

6. Dispositif de filtration selon l'une des revendications 1 à 5, **caractérisé en ce que**
la structure de surface (12) est un tissu, un tricot, un non-tissé ou une pièce en matière synthétique moulée et **en ce que**, de préférence, la taille des pores de la structure de surface (12) est dans la plage de 50 µm à 300 µm et, de préférence, de 80 µm à 200 µm.

7. Dispositif de filtration selon l'une des revendications 1 à 6, **caractérisé en ce que**
le rapport des aires de section transversale fluidiques A : B : C : D, avec une tolérance d'environ ± 50%, est à peu près égal à 1 : 2 : 10 : 20, où
A = aire totale libre de la section transversale de passage des ouvertures de désaération (10) dans le couvercle (5) ;
B = aire totale libre de la section transversale de passage des ouvertures d'admission (8) pour le liquide dans le couvercle (5) ;
C = aire libre projetée totale de la section transversale de passage servant à la désaération des pores de la partie (13) se trouvant en partie supérieure dans le couvercle (5) de la structure de surface (12) ; et
D = aire totale libre de la section transversale de passage pour du liquide à travers les pores de la partie d'enveloppe inférieure annulaire de la structure de surface (12).

8. Dispositif de filtration selon l'une des revendications 1 à 7, **caractérisé en ce que**
le volume intérieur (Vᵢ) fourni par la structure de surface (12) ≥ 5% du volume de remplissage du matériau filtrant (4) placé dans le pichet à filtre (2).

9. Dispositif de filtration selon l'une des revendications 1 à 8, **caractérisé en ce que**
la partie (13) éloignée, se trouvant en partie supérieure dans le couvercle (5) de la structure de surface (12), présente au moins dans la zone supérieure un matériau hydrophobe ou rendu hydrophobe.

10. Dispositif de filtration selon l'une des revendications 1 à 9, **caractérisé en ce que**
la partie inférieure de la structure de surface (12), dans la zone des ouvertures d'admission (8) prévues pour le passage du liquide, présente des parties hydrophiles.

11. Dispositif de filtration selon la revendication 1, **caractérisé en ce que** la structure de surface (12) du genre d'un tamis est montée de manière que, conjointement avec les parois du pichet à filtre (2), se forme un volume (Vᵤ) dans lequel se trouve le matériau filtrant (4), **caractérisé en ce que**
la structure de surface (12) du genre d'un tamis est déplaçable au moins partiellement de sorte qu'elle peut prendre deux positions extrêmes et des positions intermédiaires entre celles-ci, sachant que lors du passage de la première à la deuxième position extrême, le volume (Vᵤ) est diminué d'une valeur de différence de volume ΔV.

12. Dispositif de filtration (1) selon la revendication 11, **caractérisé en ce que**
la surface d'un plan de référence (35) passant par le bord de la structure de surface (12) est inférieure à la surface effective de la structure de surface (12).

13. Dispositif de filtration selon la revendication 11 ou 12, **caractérisé en ce que**
la au moins une ouverture de désaération est disposée sur le même côté de la structure de surface (12) du genre d'un tamis que celui auquel est disposée l'ouverture d'admission (8).

14. Dispositif de filtration (1) selon l'une des revendications 11 à 13, **caractérisé en ce que**
la différence de volume ΔV est d'au moins 1%, de préférence, d'au moins 5%, de façon particulièrement préférée d'au moins 10% du volume de remplissage du matériau filtrant (4) dans le pichet à filtre (2).

15. Dispositif de filtration (1) selon l'une des revendications 11 à 14, **caractérisé en ce que**
le volume de différence ΔV est d'au moins 1%, de préférence, d'au moins 5%, de manière particulièrement préférée d'au moins 10% du volume Vᵤ.

16. Dispositif de filtration (1) selon l'une des revendications 11 à 15, **caractérisé en ce que**
la structure de surface (12) du genre d'un tamis, à la deuxième position extrême, vient en contact avec la face supérieure réglée de manière correspondante du matériau filtrant (4) et/ou avec un autre composant.

17. Dispositif de filtration (1) selon l'une des revendications 12 à 16, **caractérisé en ce que**
la partie (37), éloignée du plan de référence (35) de la structure de surface (12), n'entre pas en contact avec la paroi du couvercle (5) lorsqu'on est à la position extrême.

18. Dispositif de filtration (1) selon l'une des revendications 11 à 17, **caractérisé en ce que**
le dispositif de filtration (1) fonctionne sous l'effet de la gravité, sachant qu'à la première position extrême de la structure (12), au moins une partie de la structure (12) est à un niveau plus élevé que la même partie lorsqu'on se trouve à la deuxième position extrême.

19. Dispositif de filtration (1) selon la revendication 18, **caractérisé en ce qu'**
à la première position extrême, la partie éloignée du plan de référence (35) de la structure de surface (12) et l'ouverture de désaération (10) sont disposées au-dessus de l'extrémité placée le plus haut de l'ouverture d'admission (8).

20. Dispositif de filtration (1) selon l'une des revendications 11 à 19, **caractérisé en ce que**
la structure de surface (12) est un tissu, un matelas, un non-tissé un tricot ou une pièce en matière synthétique moulée, et **en ce que** de préférence, la taille de pores de la structure de surface (12) est dans la plage de 50 µm à 300 µm et, de façon particulièrement préférée, entre 80 µm et 200 µm.

21. Dispositif de filtration (1) selon l'une des revendications 18 à 20, **caractérisé en ce que**
le rapport des aires de section transversale fluidiques A : B : C : D, avec une tolérance d'environ ± 50%, de préférence, d'environ ± 25%, est à peu près égal à 1 : 2 : 10 : 20, où
A = l'aire de section transversale libre, totale, de passage des ouvertures de désaération (10) ;
B = l'aire de section transversale libre, totale, de passage des ouvertures d'admission (8) pour le liquide ;
C = l'aire de section transversale libre, totale, de passage servant à la désaération des pores de la structure de surface (12) à la première position extrême; et
D = l'aire libre totale de la section transversale de passage pour le liquide, à travers les pores de la partie inférieure sensiblement en forme d'anneau de la structure de surface (12), à la première position extrême.

22. Dispositif de filtration (1) selon l'une des revendications 11 à 21, **caractérisé en ce que**
la structure de surface (12) du genre d'un tamis présente des parties hydrophiles.

23. Dispositif de filtration (1) selon l'une des revendications 20 à 22, **caractérisé en ce que**
l'épaisseur de fil de la structure de surface (12) textile est comprise entre 5 et 100 µm, de préférence, entre 10 et 60 µm.

24. Dispositif de filtration (1) selon l'une des revendications 11 à 23, **caractérisé en ce que**
la structure de surface (12) est fabriquée à partir d'un matériau flexible et/ou élastique.
